# EUROPEAN PATENT APPLICATION

(11) **EP 4 811 732 A1**
(43) Date of publication of application: **23.09.2026**
(21) Application number: 23958965.8
(22) Date of filing: 16.11.2023
(51) Int. Cl.: H04L 27/26

(54) **CFO ESTIMATION METHOD AND DEVICE BASED ON ORTHOGONAL CHIRP SIGNAL IN WIRELESS COMMUNICATION SYSTEM**

(71) Applicant: LG Electronics Inc., Yeongdeungpo-gu Seoul 07336 (KR)
(72) Inventor: PARK, Seju, Seoul 06772 (KR); LEE, Dongsun, Seoul 06772 (KR); KIM, Kijun, Seoul 06772 (KR); KIM, Byounggill, Seoul 06772 (KR)
(74) Representative: Mooser, Sebastian Thomas
(86) International application number: PCT/KR2023/018503
(87) International publication number: WO 2025/105538

(57) **Abstract**

According to various embodiments of the present disclosure, a method performed by a user equipment (UE) in a wireless communication system may comprise receiving, from a base station (BS), a first reception signal that is based on a first orthogonal chirp signal and a first conjugate signal which is a conjugate signal of the first orthogonal chirp signal, obtaining the first orthogonal chirp signal and the first conjugate signal based on the first reception signal, obtaining a first correlation based on the first orthogonal chirp signal and a second orthogonal chirp signal related to the first orthogonal chirp signal, obtaining a second correlation based on the first conjugate signal and a second conjugate signal which is a conjugate signal of the second orthogonal chirp signal, obtaining a peak value of the first correlation, obtaining a peak value of the second correlation, and obtaining a carrier frequency offset (CFO) value for the first reception signal based on the peak value of the first correlation and the peak value of the second correlation.

## Description

### [TECHNICAL FIELD]

The present disclosure relates to a wireless communication system. More particularly, the present disclosure relates to a device and method for estimating a carrier frequency offset (CFO) based on an orthogonal chirp signal in a wireless communication system.

### [BACKGROUND]

Wireless access systems have been widely deployed to provide various types of communication services such as voice and data. In general, the wireless access system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as more and more communication devices require larger communication capacity, an enhanced mobile broadband (eMBB) communication technology is proposed compared to the existing radio access technology (RAT). In addition, massive machine type communications (mMTC), which connect multiple devices and objects to provide various services anytime and anywhere, as well as communication systems that consider reliability and latency-sensitive services/user equipments (UEs) are being proposed. Various technical configurations for this purpose are being proposed.

Among factors that degrade performance in terahertz (THz)-band communication systems, carrier frequency offset (CFO) and phase noise (PN) are representative. The CFO may be generally generated by RF impairment and the Doppler effect, and the PN may be generated by the RF impairment. The CFO and the PN have a problem that make it difficult for the UE to detect the PSS.

### [DISCLOSURE]

### [TECHNICAL PROBLEM]

To solve the above-mentioned problems, the present disclosure provides a device and method for estimating a carrier frequency offset (CFO) using an orthogonal chirp signal in the THz band.

### [TECHNICAL SOLUTION]

A method performed by a user equipment (UE) in a wireless communication system according to an embodiment of the present disclosure may comprise receiving, from a base station (BS), a first reception signal that is based on a first orthogonal chirp signal and a first conjugate signal which is a conjugate signal of the first orthogonal chirp signal, obtaining the first orthogonal chirp signal and the first conjugate signal based on the first reception signal, and obtaining a first correlation based on the first orthogonal chirp signal and a second orthogonal chirp signal related to the first orthogonal chirp signal.

The method may comprise obtaining a second correlation based on the first conjugate signal and a second conjugate signal which is a conjugate signal of the second orthogonal chirp signal, obtaining a peak value of the first correlation, obtaining a peak value of the second correlation, and obtaining a carrier frequency offset (CFO) value for the first reception signal based on the peak value of the first correlation and the peak value of the second correlation.

The obtaining of the first orthogonal chirp signal and the first conjugate signal based on the first reception signal may comprise performing oversampling on the first orthogonal chirp signal with respect to a sampling factor, and performing oversampling on the first conjugate signal with respect to the sampling factor.

The obtaining of the CFO value for the first reception signal based on the peak value of the first correlation and the peak value of the second correlation may comprise obtaining the CFO value for the first reception signal based on the peak value of the first correlation, the peak value of the second correlation, and the sampling factor.

The method may further comprise performing synchronization with the base station based on the peak value of the first correlation and the peak value of the second correlation.

A user equipment (UE) operating in a communication system according to an embodiment of the present disclosure may comprise one or more transceivers, one or more processors controlling the one or more transceivers, and a memory comprising one or more instructions executed by the one or more processors. The one or more instructions may comprise receiving, from a base station (BS), a first reception signal that is based on a first orthogonal chirp signal and a first conjugate signal which is a conjugate signal of the first orthogonal chirp signal, obtaining the first orthogonal chirp signal and the first conjugate signal based on the first reception signal, obtaining a first correlation based on the first orthogonal chirp signal and a second orthogonal chirp signal related to the first orthogonal chirp signal, obtaining a second correlation based on the first conjugate signal and a second conjugate signal which is a conjugate signal of the second orthogonal chirp signal, obtaining a peak value of the first correlation, obtaining a peak value of the second correlation, and obtaining a carrier frequency offset (CFO) value for the first reception signal based on the peak value of the first correlation and the peak value of the second correlation.

The obtaining of the first orthogonal chirp signal and the first conjugate signal based on the first reception signal may comprise performing oversampling on the first orthogonal chirp signal with respect to a sampling factor, and performing oversampling on the first conjugate signal with respect to the sampling factor.

The obtaining of the CFO value for the first reception signal based on the peak value of the first correlation and the peak value of the second correlation may comprise obtaining the CFO value for the first reception signal based on the peak value of the first correlation, the peak value of the second correlation, and the sampling factor.

The one or more instructions may further comprise performing synchronization with the base station based on the peak value of the first correlation and the peak value of the second correlation.

A method performed by a base station (BS) in a wireless communication system according to an embodiment of the present disclosure may comprise generating a first reception signal that is based on a first orthogonal chirp signal and a first conjugate signal which is a conjugate signal of the first orthogonal chirp signal, transmitting the first reception signal to a user equipment (UE), and performing synchronization with the UE based on the first reception signal. The synchronization may be performed based on a peak value of a first correlation obtained based on the first orthogonal chirp signal and a second orthogonal chirp signal related to the first orthogonal chirp signal, and a peak value of a second correlation obtained based on the first orthogonal chirp signal, the first conjugate signal, and a second conjugate signal related to the first conjugate signal.

The generating of the first reception signal based on the first orthogonal chirp signal and the first conjugate signal which is the conjugate signal of the first orthogonal chirp signal may comprise performing an up-conversion on the first orthogonal chirp signal, performing an up-conversion on the first conjugate signal, and generating the first reception signal by performing summation on the up-converted first orthogonal chirp signal and the up-converted first conjugate signal.

A base station (BS) operating in a communication system according to an embodiment of the present disclosure may comprise one or more transceivers, one or more processors controlling the one or more transceivers, and a memory comprising one or more instructions executed by the one or more processors. The one or more instructions may comprise generating a first reception signal that is based on a first orthogonal chirp signal and a first conjugate signal which is a conjugate signal of the first orthogonal chirp signal, transmitting the first reception signal to a user equipment (UE), and performing synchronization with the user equipment based on the first reception signal. The synchronization may be performed based on a peak value of a first correlation obtained based on the first orthogonal chirp signal and a second orthogonal chirp signal related to the first orthogonal chirp signal, and a peak value of a second correlation obtained based on the first orthogonal chirp signal, the first conjugate signal, and a second conjugate signal related to the first conjugate signal.

The generating of the first reception signal based on the first orthogonal chirp signal and the first conjugate signal which is the conjugate signal of the first orthogonal chirp signal may comprise performing an up-conversion on the first orthogonal chirp signal, performing an up-conversion on the first conjugate signal, and generating the first reception signal by performing summation on the up-converted first orthogonal chirp signal and the up-converted first conjugate signal.

An apparatus according to an embodiment of the present disclosure may comprise one or more memories, and one or more processors functionally coupled to the one or more memories. The one or more processors may be configured to cause the apparatus to receive, from a base station (BS), a first reception signal that is based on a first orthogonal chirp signal and a first conjugate signal which is a conjugate signal of the first orthogonal chirp signal, obtain the first orthogonal chirp signal and the first conjugate signal based on the first reception signal, obtain a first correlation based on the first orthogonal chirp signal and a second orthogonal chirp signal related to the first orthogonal chirp signal, obtain a second correlation based on the first conjugate signal and a second conjugate signal which is a conjugate signal of the second orthogonal chirp signal, obtain a peak value of the first correlation, obtain a peak value of the second correlation, and obtain a carrier frequency offset (CFO) value for the first reception signal based on the peak value of the first correlation and the peak value of the second correlation.

A non-transitory computer-readable medium according to an embodiment of the present disclosure storing one or more instructions may be configured to receive, from a base station (BS), a first reception signal that is based on a first orthogonal chirp signal and a first conjugate signal which is a conjugate signal of the first orthogonal chirp signal, obtain the first orthogonal chirp signal and the first conjugate signal based on the first reception signal, obtain a first correlation based on the first orthogonal chirp signal and a second orthogonal chirp signal related to the first orthogonal chirp signal, obtain a second correlation based on the first conjugate signal and a second conjugate signal which is a conjugate signal of the second orthogonal chirp signal, obtain a peak value of the first correlation, obtain a peak value of the second correlation, and obtain a carrier frequency offset (CFO) value for the first reception signal based on the peak value of the first correlation and the peak value of the second correlation.

### [ADVANTAGEOUS EFFECTS]

According to the present disclosure, the CFO can be simply estimated along with time synchronization.

### [BRIEF DESCRIPTION OF THE DRAWINGS]

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.
FIG. 1 illustrates an example of a communication system applicable to the present disclosure.
FIG. 2 illustrates an example of a wireless apparatus applicable to the present disclosure.
FIG. 3 illustrates a method of processing a transmitted signal applicable to the present disclosure.
FIG. 4 illustrates another example of a wireless device applicable to the present disclosure.
FIG. 5 illustrates an example of a hand-held device applicable to the present disclosure.
FIG. 6 illustrates physical channels applicable to the present disclosure and a signal transmission method using the same.
FIG. 7 illustrates the structure of a radio frame applicable to the present disclosure.
FIG. 8 illustrates a slot structure applicable to the present disclosure.
FIG. 9 illustrates an example of a communication structure providable in a 6G system applicable to the present disclosure.
FIG. 10 illustrates an example of a structure of a perceptron.
FIG. 11 illustrates an example of a structure of a multilayer perceptron.
FIG. 12 illustrates an example of a deep neural network.
FIG. 13 illustrates an example of a convolutional neural network.
FIG. 14 illustrates an example of a filter operation in a convolutional neural network.
FIG. 15 illustrates an example of a neural network structure in which a circular loop exists.
FIG. 16 illustrates an example of an operation structure of a recurrent neural network.
FIG. 17 illustrates an electromagnetic spectrum applicable to the present disclosure.
FIG. 18 illustrates a THz communication method applicable to the present disclosure.
FIG. 19 illustrates a THz wireless communication transceiver applicable to the present disclosure.
FIG. 20 illustrates a THz signal generation method applicable to the present disclosure.
FIG. 21 illustrates a wireless communication transceiver applicable to the present disclosure.
FIG. 22 illustrates a transmitter structure applicable to the present disclosure.
FIG. 23 illustrates a modulator structure applicable to the present disclosure.
FIG. 24 illustrates an example of ICI generation according to carrier frequency offset (CFO) in a wireless communication system.
FIG. 25 illustrates an example of ICI impact according to CFO in a wireless communication system.
FIG. 26 illustrates a linear chirp signal on a time/size axis in a wireless communication system.
FIG. 27 illustrates a linear chirp signal on a time/frequency axis in a wireless communication system.
FIG. 28 illustrates an example of a general chirp signal in a wireless communication system.
FIG. 29 illustrates an example of an orthogonal chirp signal in a wireless communication system.
FIG. 30 illustrates an example of an OFDM signal in a wireless communication system.
FIG. 31 illustrates an example of an OCDM signal in a wireless communication system.
FIGS. 32 and 33 illustrate an example of autocorrelation in a wireless communication system.
FIGS. 34 and 35 illustrate an example of a first signal in a wireless communication system.
FIGS. 36 and 37 illustrate an example of a third signal in a wireless communication system.
FIGS. 38 and 39 illustrate an example of a correlation when a positive CFO is inserted in a wireless communication system.
FIGS. 40 and 41 illustrate an example of a correlation when a negative CFO is inserted in a wireless communication system.
FIGS. 42 and 43 illustrate an example of a fifth signal in a wireless communication system.
FIGS. 44 and 45 illustrate an example of a CFO estimation method according to an embodiment of the present disclosure.
FIG. 46 illustrates an example of a diagram of a CFO estimation method according to an embodiment of the present disclosure.
FIG. 47 is a flowchart illustrating a method of transmitting and receiving a signal according to an embodiment of the present disclosure.
FIG. 48 is a flowchart illustrating a method of transmitting and receiving a signal according to another embodiment of the present disclosure.

### [DETAILED DESCRIPTION]

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an UpLink (UL). Likewise, the mobile station may serve as a receiver and the BS may serve as a transmitter, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation(5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

### Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

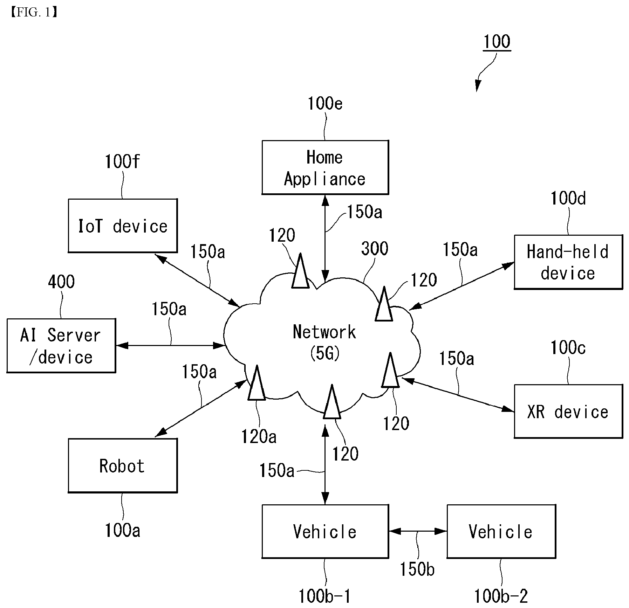

FIG. 1 illustrates an example of a communication system applicable to the present disclosure. Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

### Communication system applicable to the present disclosure

FIG. 2 illustrates an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be connected with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be connected with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be connected with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be connected with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip.

Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein.

One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be connected with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computer-readable storage mediums and/or combinations thereof. One or more memories 204a and 204b may be located inside and/or outside one or more processors 202a and 202b. In addition, one or more memories 204a and 204b may be connected with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be connected with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be connected with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

FIG. 3 illustrates a method of processing a transmitted signal applicable to the present disclosure. For example, the transmitted signal may be processed by a signal processing circuit. At this time, a signal processing circuit 300 may include a scrambler 310, a modulator 320, a layer mapper 330, a precoder 340, a resource mapper 350, and a signal generator 360. At this time, for example, the operation/function of FIG. 3 may be performed by the processors 202a and 202b and/or the transceiver 206a and 206b of FIG. 2. In addition, for example, the hardware element of FIG. 3 may be implemented in the processors 202a and 202b of FIG. 2 and/or the transceivers 206a and 206b of FIG. 2. For example, blocks 1010 to 1060 may be implemented in the processors 202a and 202b of FIG. 2. In addition, blocks 310 to 350 may be implemented in the processors 202a and 202b of FIG. 2 and a block 360 may be implemented in the transceivers 206a and 206b of FIG. 2, without being limited to the above-described embodiments.

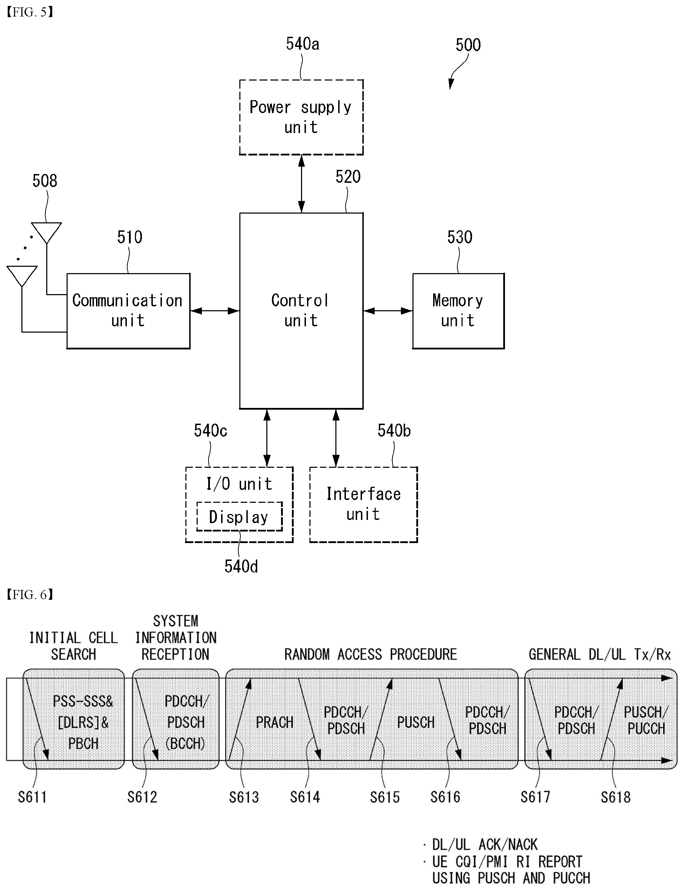

A codeword may be converted into a radio signal through the signal processing circuit 300 of FIG. 3. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH) of FIG. 6. Specifically, the codeword may be converted into a bit sequence scrambled by the scrambler 310. The scramble sequence used for scramble is generated based in an initial value and the initial value may include ID information of a wireless device, etc. The scrambled bit sequence may be modulated into a modulated symbol sequence by the modulator 320. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 330. Modulation symbols of each transport layer may be mapped to corresponding antenna port(s) by the precoder 340 (precoding). The output z of the precoder 340 may be obtained by multiplying the output y of the layer mapper 330 by an N*M precoding matrix W. Here, N may be the number of antenna ports and M may be the number of transport layers. Here, the precoder 340 may perform precoding after transform precoding (e.g., discrete Fourier transform (DFT)) for complex modulation symbols. In addition, the precoder 340 may perform precoding without performing transform precoding.

The resource mapper 350 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 360 may generate a radio signal from the mapped modulation symbols, and the generated radio signal may be transmitted to another device through each antenna. To this end, the signal generator 360 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 310 to 360 of FIG. 3. For example, the wireless device (e.g., 200a or 200b of FIG. 3) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a de-scrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

### Structure of wireless device applicable to the present disclosure

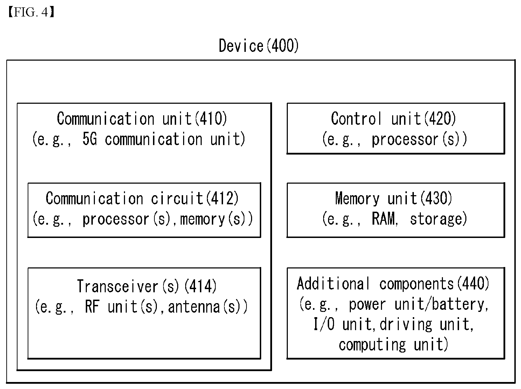

FIG. 4 illustrates another example of a wireless device applicable to the present disclosure.

Referring to FIG. 4, a wireless device 400 may correspond to the wireless devices 200a and 200b of FIG. 2 and include various elements, components, units/portions and/or modules. For example, the wireless device 300 may include a communication unit 410, a control unit (controller) 420, a memory unit (memory) 430 and additional components 440. The communication unit may include a communication circuit 412 and a transceiver(s) 414. For example, the communication circuit 412 may include one or more processors 202a and 202b and/or one or more memories 204a and 204b of FIG. 2. For example, the transceiver(s) 414 may include one or more transceivers 206a and 206b and/or one or more antennas 208a and 208b of FIG. 2. The control unit 420 may be electrically connected with the communication unit 410, the memory unit 430 and the additional components 440 to control overall operation of the wireless device. For example, the control unit 420 may control electrical/mechanical operation of the wireless device based on a program/code/instruction/information stored in the memory unit 430. In addition, the control unit 420 may transmit the information stored in the memory unit 430 to the outside (e.g., another communication device) through the wireless/wired interface using the communication unit 410 over a wireless/wired interface or store information received from the outside (e.g., another communication device) through the wireless/wired interface using the communication unit 410 in the memory unit 430.

The additional components 440 may be variously configured according to the types of the wireless devices. For example, the additional components 440 may include at least one of a power unit/battery, an input/output unit, a driving unit or a computing unit. Without being limited thereto, the wireless device 300 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 4, various elements, components, units/portions and/or modules in the wireless device 400 may be connected with each other through wired interfaces or at least some thereof may be wirelessly connected through the communication unit 410. For example, in the wireless device 400, the control unit 420 and the communication unit 410 may be connected by wire, and the control unit 420 and the first unit (e.g., 130 or 140) may be wirelessly connected through the communication unit 410. In addition, each element, component, unit/portion and/or module of the wireless device 400 may further include one or more elements. For example, the control unit 420 may be composed of a set of one or more processors. For example, the control unit 420 may be composed of a set of a communication control processor, an application processor, an electronic control unit (ECU), a graphic processing processor, a memory control processor, etc. In another example, the memory unit 430 may be composed of a random access memory (RAM), a dynamic RAM (DRAM), a read only memory (ROM), a flash memory, a volatile memory, a non-volatile memory and/or a combination thereof.

### Hand-held device applicable to the present disclosure

FIG. 5 illustrates an example of a hand-held device applicable to the present disclosure.

FIG. 5 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 5, the hand-held device 400 may include an antenna unit (antenna) 508, a communication unit (transceiver) 510, a control unit (controller) 520, a memory unit (memory) 530, a power supply unit (power supply) 540a, an interface unit (interface) 540b, and an input/output unit 540c. An antenna unit (antenna) 508 may be part of the communication unit 510. The blocks 510 to 530/540a to 540c may correspond to the blocks 410 to 430/440 of FIG. 4, respectively.

The communication unit 510 may transmit and receive signals (e.g., data, control signals, etc.) to and from other wireless devices or base stations. The control unit 520 may control the components of the hand-held device 500 to perform various operations. The control unit 520 may include an application processor (AP). The memory unit 530 may store data/parameters/program/code/instructions necessary to drive the hand-held device 400. In addition, the memory unit 530 may store input/output data/information, etc. The power supply unit 540a may supply power to the hand-held device 500 and include a wired/wireless charging circuit, a battery, etc. The interface unit 540b may support connection between the hand-held device 500 and another external device. The interface unit 540b may include various ports (e.g., an audio input/output port and a video input/output port) for connection with the external device. The input/output unit 540c may receive or output video information/signals, audio information/signals, data and/or user input information. The input/output unit 540c may include a camera, a microphone, a user input unit, a display 540d, a speaker and/or a haptic module.

For example, in case of data communication, the input/output unit 540c may acquire user input information/signal (e.g., touch, text, voice, image or video) from the user and store the user input information/signal in the memory unit 530. The communication unit 510 may convert the information/signal stored in the memory into a radio signal and transmit the converted radio signal to another wireless device directly or transmit the converted radio signal to a base station. In addition, the communication unit 510 may receive a radio signal from another wireless device or the base station and then restore the received radio signal into original information/signal. The restored information/signal may be stored in the memory unit 530 and then output through the input/output unit 540c in various forms (e.g., text, voice, image, video and haptic).

### Physical channels and general signal transmission

In a radio access system, a UE receives information from a base station on a DL and transmits information to the base station on a UL. The information transmitted and received between the UE and the base station includes general data information and a variety of control information. There are many physical channels according to the types/usages of information transmitted and received between the base station and the UE.

FIG. 6 illustrates physical channels applicable to the present disclosure and a signal transmission method using the same.

The UE which is turned on again in a state of being turned off or has newly entered a cell performs initial cell search operation in step S611 such as acquisition of synchronization with a base station. Specifically, the UE performs synchronization with the base station, by receiving a Primary Synchronization Channel (P-SCH) and a Secondary Synchronization Channel (S-SCH) from the base station, and acquires information such as a cell Identifier (ID).

Thereafter, the UE may receive a physical broadcast channel (PBCH) signal from the base station and acquire intra-cell broadcast information. Meanwhile, the UE may receive a downlink reference signal (DL RS) in an initial cell search step and check a downlink channel state. The UE which has completed initial cell search may receive a physical downlink control channel (PDCCH) and a physical downlink control channel (PDSCH) according to physical downlink control channel information in step S612, thereby acquiring more detailed system information.

Thereafter, the UE may perform a random access procedure such as steps S613 to S616 in order to complete access to the base station. To this end, the UE may transmit a preamble through a physical random access channel (PRACH) (S613) and receive a random access response (RAR) to the preamble through a physical downlink control channel and a physical downlink shared channel corresponding thereto (S614). The UE may transmit a physical uplink shared channel (PUSCH) using scheduling information in the RAR (S615) and perform a contention resolution procedure such as reception of a physical downlink control channel signal and a physical downlink shared channel signal corresponding thereto (S616).

The UE, which has performed the above-described procedures, may perform reception of a physical downlink control channel signal and/or a physical downlink shared channel signal (S617) and transmission of a physical uplink shared channel (PUSCH) signal and/or a physical uplink control channel (PUCCH) signal (S618) as general uplink/downlink signal transmission procedures.

The control information transmitted from the UE to the base station is collectively referred to as uplink control information (UCI). The UCI includes hybrid automatic repeat and request acknowledgement/negative-ACK (HARQ-ACK/NACK), scheduling request (SR), channel quality indication (CQI), precoding matrix indication (PMI), rank indication (RI), beam indication (BI) information, etc. At this time, the UCI is generally periodically transmitted through a PUCCH, but may be transmitted through a PUSCH in some embodiments (e.g., when control information and traffic data are simultaneously transmitted). In addition, the UE may aperiodically transmit UCI through a PUSCH according to a request/instruction of a network.

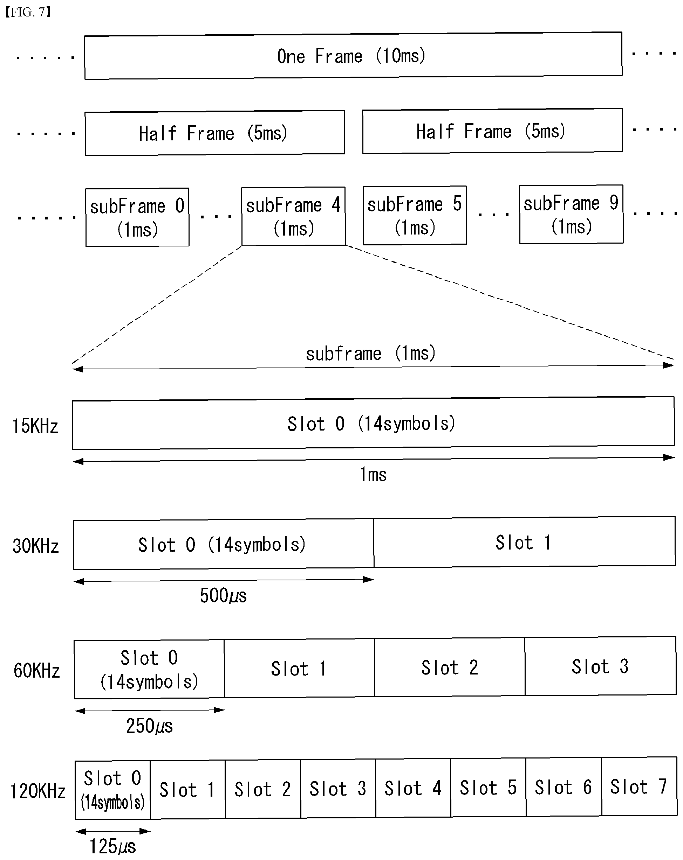

FIG. 7 illustrates the structure of a radio frame applicable to the present disclosure.

UL and DL transmission based on an NR system may be based on the frame shown in FIG. 7. At this time, one radio frame has a length of 10 ms and may be defined as two 5-ms half-frames (HFs). One half-frame may be defined as five 1-ms subframes (SFs). One subframe may be divided into one or more slots and the number of slots in the subframe may depend on subscriber spacing (SCS). At this time, each slot may include 12 or 14 OFDM(A) symbols according to cyclic prefix (CP). If normal CP is used, each slot may include 14 symbols. If an extended CP is used, each slot may include 12 symbols. Here, the symbol may include an OFDM symbol (or a CP-OFDM symbol) and an SC-FDMA symbol (or a DFT-s-OFDM symbol).

Table 1 shows the number of symbols per slot according to SCS, the number of slots per frame and the number of slots per subframe when normal CP is used, and Table 2 shows the number of symbols per slot according to SCS, the number of slots per frame and the number of slots per subframe when extended CP is used.

**[Table 1]**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

**[Table 2]**

| *µ* | ${N}_{symb}^{slot}$ | ${N}_{slot}^{frame , μ}$ | ${N}_{slot}^{subframe , μ}$ |
|---|---|---|---|
| 2 | 12 | 40 | 4 |

In Tables 1 and 2 above, ${N}_{symb}^{slot}$ may indicate the number of symbols in a slot, ${N}_{slot}^{frame , μ}$ may indicate the number of slots in a frame, and ${N}_{slot}^{subframe , μ}$ may indicate the number of slots in a subframe.

In addition, in a system, to which the present disclosure is applicable, OFDM(A) numerology (e.g., SCS, CP length, etc.) may be differently set among a plurality of cells merged to one UE. Accordingly, an (absolute time) period of a time resource (e.g., an SF, a slot or a TTI) (for convenience, collectively referred to as a time unit (TU)) composed of the same number of symbols may be differently set between merged cells.

NR may support a plurality of numerologies (or subscriber spacings (SCSs)) supporting various 5G services. For example, a wide area in traditional cellular bands is supported when the SCS is 15 kHz, dense-urban, lower latency and wider carrier bandwidth are supported when the SCS is 30 kHz/60 kHz, and bandwidth greater than 24.25 GHz may be supported to overcome phase noise when the SCS is 60 kHz or higher.

An NR frequency band is defined as two types (FR1 and FR2) of frequency ranges. FR1 and FR2 may be configured as shown in the following table. In addition, FR2 may mean millimeter wave (mmW).

**[Table 3]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

In addition, for example, in a communication system, to which the present disclosure is applicable, the above-described numerology may be differently set. For example, a terahertz wave (THz) band may be used as a frequency band higher than FR2. In the THz band, the SCS may be set greater than that of the NR system, and the number of slots may be differently set, without being limited to the above-described embodiments. The THz band will be described below.

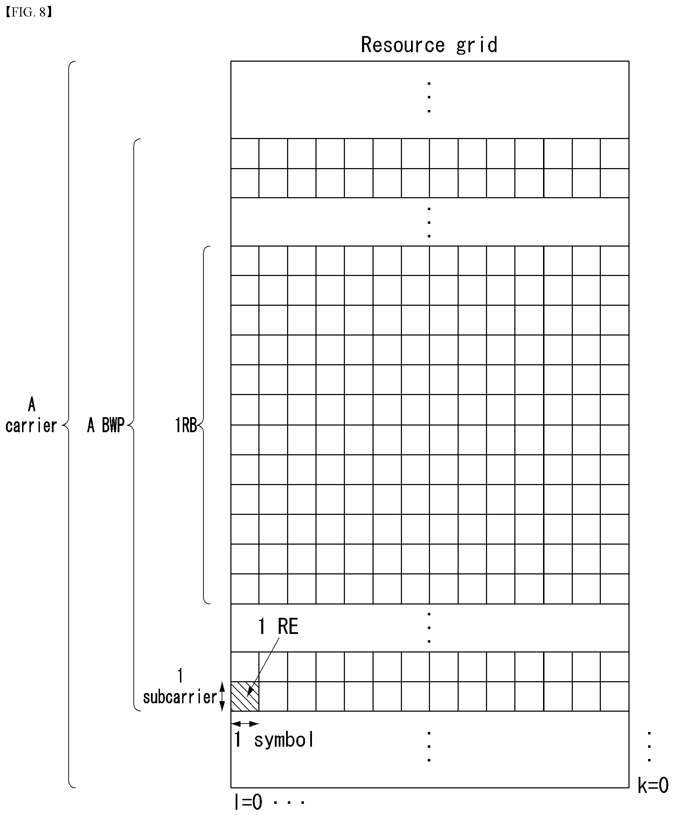

FIG. 8 illustrates a slot structure applicable to the present disclosure.

One slot includes a plurality of symbols in the time domain. For example, one slot includes seven symbols in case of normal CP and one slot includes six symbols in case of extended CP. A carrier includes a plurality of subcarriers in the frequency domain. A resource block (RB) may be defined as a plurality (e.g., 12) of consecutive subcarriers in the frequency domain.

In addition, a bandwidth part (BWP) is defined as a plurality of consecutive (P)RBs in the frequency domain and may correspond to one numerology (e.g., SCS, CP length, etc.).

The carrier may include a maximum of N (e.g., five) BWPs. Data communication is performed through an activated BWP and only one BWP may be activated for one UE. In resource grid, each element is referred to as a resource element (RE) and one complex symbol may be mapped.

### 6G communication system

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

**[Table 4]**

| | |
|---|---|
| **Per device peak data rate** | 1 Tbps |
| **E2E latency** | 1 ms |
| **Maximum spectral efficiency** | 100bps/Hz |
| **Mobility support** | Up to 1000km/hr |
| **Satellite integration** | Fully |
| **AI** | Fully |
| **Autonomous vehicle** | Fully |
| **XR** | Fully |
| **Haptic Communication** | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

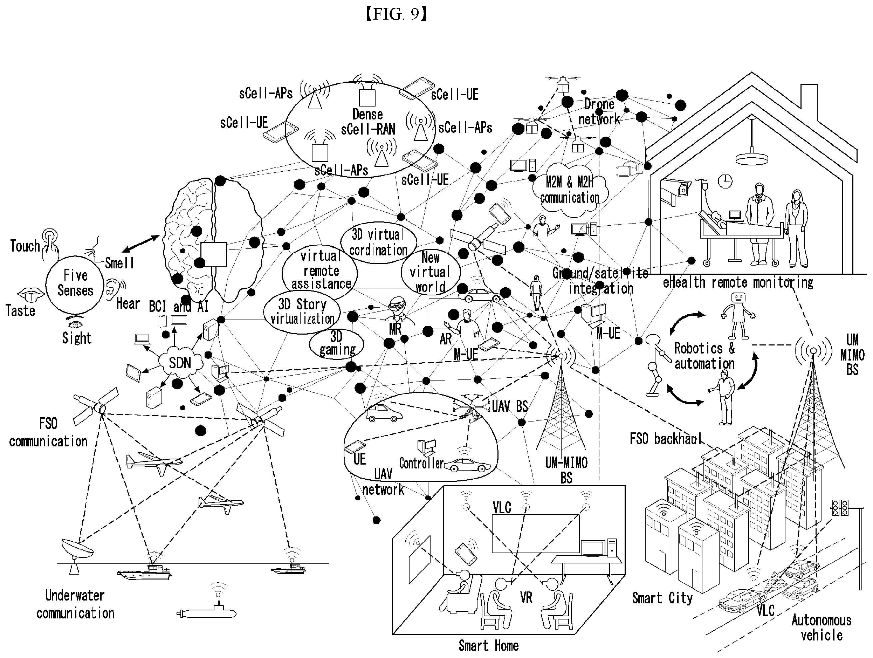

FIG. 9 illustrates an example of a communication structure providable in a 6G system applicable to the present disclosure.

Referring to FIG. 9, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

### Core implementation technology of 6G system

### - Artificial Intelligence (AI)

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

However, application of a deep neutral network (DNN) for transmission in the physical layer may have the following problems.

Deep learning-based AI algorithms require a lot of training data in order to optimize training parameters. However, due to limitations in acquiring data in a specific channel environment as training data, a lot of training data is used offline. Static training for training data in a specific channel environment may cause a contradiction between the diversity and dynamic characteristics of a radio channel.

In addition, currently, deep learning mainly targets real signals. However, the signals of the physical layer of wireless communication are complex signals. For matching of the characteristics of a wireless communication signal, studies on a neural network for detecting a complex domain signal are further required.

Hereinafter, machine learning will be described in greater detail.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method and a recurrent Boltzmman machine (RNN) method. Such a learning model is applicable.

An artificial neural network is an example in which multiple perceptrons are connected.

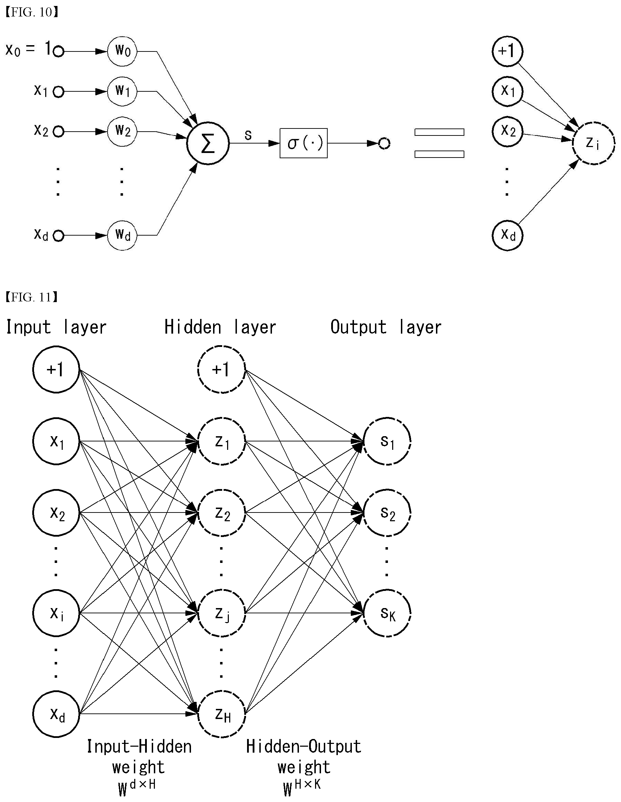

FIG. 10 illustrates an example of a structure of a perceptron.

Referring to FIG. 10, when an input vector x=(x1, x2, ..., xd) is input, each component is multiplied by a weight (W1, W2, ..., Wd), and all the results are summed. After that, the entire process of applying an activation function σ(·) is called a perceptron. The huge artificial neural network structure may extend the simplified perceptron structure illustrated in FIG. 10 to apply the input vector to different multidimensional perceptrons. For convenience of explanation, an input value or an output value is referred to as a node.

The perceptron structure illustrated in FIG. 10 may be described as consisting of a total of three layers based on the input value and the output value. FIG. 11 illustrates an artificial neural network in which the number of (d+1) dimensional perceptrons between a first layer and a second layer is H, and the number of (H+1) dimensional perceptrons between the second layer and a third layer is K, by way of example. FIG. 11 illustrates an example of a structure of a multilayer perceptron.

A layer where the input vector is located is called an input layer, a layer where a final output value is located is called an output layer, and all layers located between the input layer and the output layer are called a hidden layer. FIG. 11 illustrates three layers, by way of example. However, since the number of layers of the artificial neural network is counted excluding the input layer, it can be seen as a total of two layers. The artificial neural network is constructed by connecting the perceptrons of a basic block in two dimensions.

The above-described input layer, hidden layer, and output layer can be jointly applied in various artificial neural network structures, such as CNN and RNN to be described later, as well as the multilayer perceptron. The greater the number of hidden layers, the deeper the artificial neural network is, and a machine learning paradigm that uses the sufficiently deep artificial neural network as a learning model is called deep learning. In addition, the artificial neural network used for deep learning is called a deep neural network (DNN).

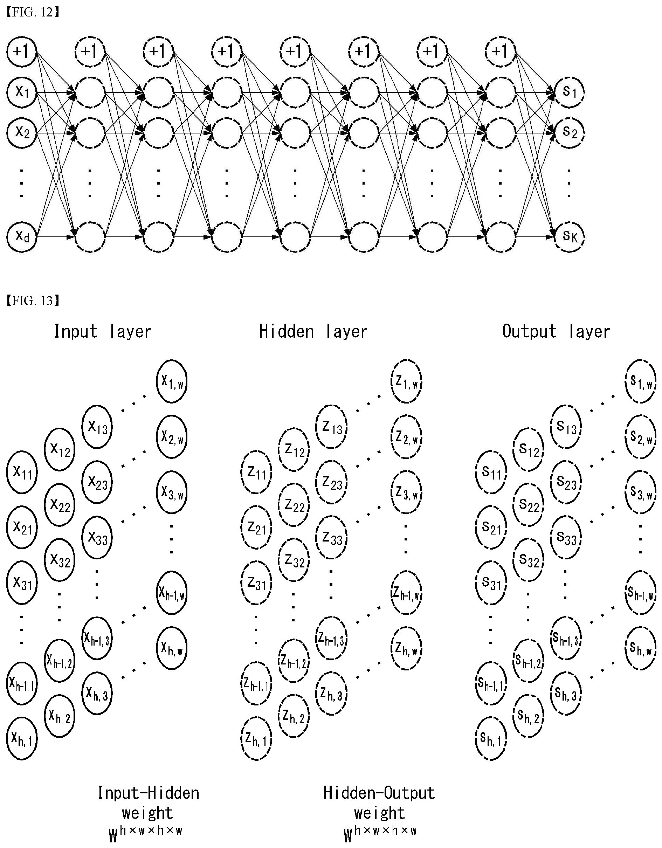

The deep neural network illustrated in FIG. 12 is a multilayer perceptron consisting of eight hidden layers + eight output layers. The multilayer perceptron structure is expressed as a fully connected neural network. In the fully connected neural network, a connection relationship does not exist between nodes located at the same layer, and a connection relationship exists only between nodes located at adjacent layers. The DNN has a fully connected neural network structure and is composed of a combination of multiple hidden layers and activation functions, so it can be usefully applied to understand correlation characteristics between input and output. The correlation characteristic may mean a joint probability of input and output.

Based on how the plurality of perceptrons are connected to each other, various artificial neural network structures different from the above-described DNN can be formed.

In the DNN, nodes located inside one layer are arranged in a one-dimensional longitudinal direction. However, in FIG. 13, it may be assumed that w nodes horizontally and h nodes vertically are arranged in two dimensions (convolutional neural network structure of FIG. 13). In this case, since in a connection process leading from one input node to the hidden layer, a weight is given for each connection, a total of h×w weights needs to be considered. Since there are h×w nodes in the input layer, a total of h2w2 weights are required between two adjacent layers.

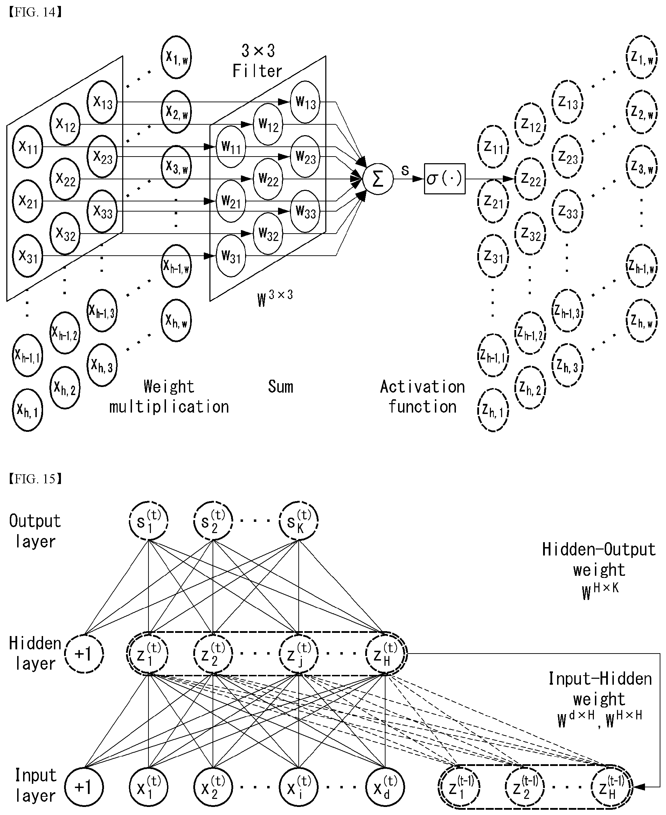

The convolutional neural network of FIG. 13 has a problem in that the number of weights increases exponentially depending on the number of connections. Therefore, instead of considering the connections of all the nodes between adjacent layers, it is assumed that a small-sized filter exists, and a weighted sum and an activation function calculation are performed on an overlap portion of the filters as illustrated in FIG. 14.

One filter has a weight corresponding to the number as much as its size, and learning of the weight may be performed so that a certain feature on an image can be extracted and output as a factor. In FIG. 14, a filter having a size of 3×3 is applied to the upper leftmost 3×3 area of the input layer, and an output value obtained by performing a weighted sum and an activation function calculation for a corresponding node is stored in z22.

The filter performs the weighted sum and the activation function calculation while moving horizontally and vertically by a predetermined interval when scanning the input layer, and places the output value at a location of a current filter. This calculation method is similar to the convolution operation on images in the field of computer vision. Thus, a deep neural network with this structure is referred to as a convolutional neural network (CNN), and a hidden layer generated as a result of the convolution operation is referred to as a convolutional layer. In addition, a neural network in which a plurality of convolutional layers exists is referred to as a deep convolutional neural network (DCNN).

At the node where a current filter is located at the convolutional layer, the number of weights may be reduced by calculating a weighted sum including only nodes located in an area covered by the filter. Hence, one filter can be used to focus on features for a local area. Accordingly, the CNN can be effectively applied to image data processing in which a physical distance on the 2D area is an important criterion. In the CNN, a plurality of filters may be applied immediately before the convolution layer, and a plurality of output results may be generated through a convolution operation of each filter.

There may be data whose sequence characteristics are important depending on data attributes. A structure, in which a method of inputting one element on the data sequence at each time step considering a length variability and a relationship of the sequence data and inputting an output vector (hidden vector) of a hidden layer output at a specific time step together with a next element on the data sequence is applied to the artificial neural network, is referred to as a recurrent neural network structure.

FIG. 15 illustrates an example of a neural network structure in which a circular loop exists.

Referring to FIG. 15, a recurrent neural network (RNN) is a structure in which in a process of inputting elements (x1(t), x2(t),..., xd(t)) of any line of sight 't' on a data sequence to a fully connected neural network, hidden vectors (z1(t-1), z2(t-1), ..., zH(t-1)) are input together at an immediately previous time step (t-1) to apply a weighted sum and an activation function. A reason for transferring the hidden vectors at a next time step is that information within the input vector in previous time steps is considered to be accumulated on the hidden vectors of a current time step.

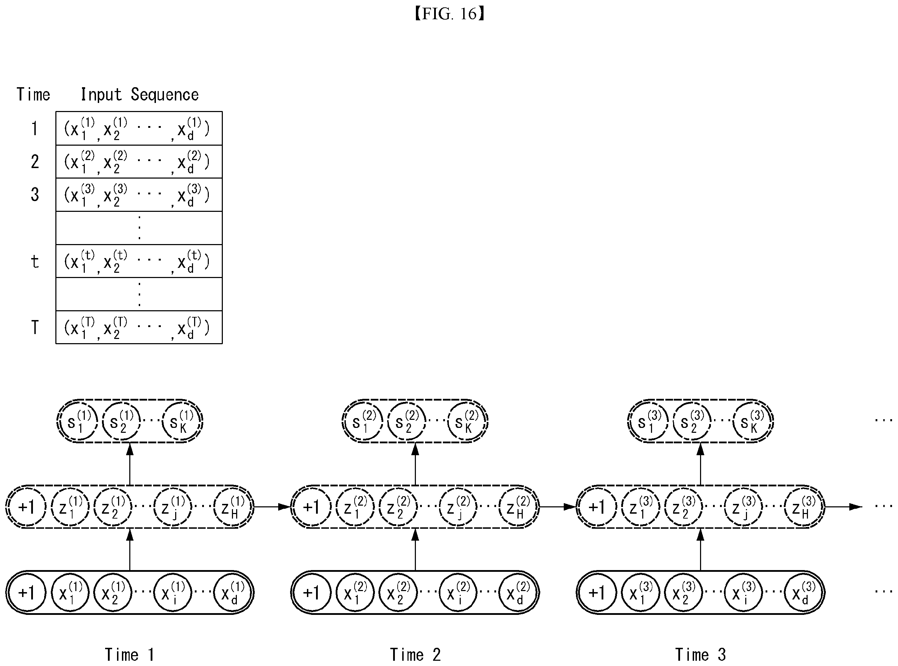

FIG. 16 illustrates an example of an operation structure of a recurrent neural network.

Referring to FIG. 16, the recurrent neural network operates in a predetermined order of time with respect to an input data sequence.

Hidden vectors (z1(1), z2(1), ..., zH(1)) when input vectors (x1(t), x2(t), ..., xd(t)) at a time step 1 are input to the recurrent neural network, are input together with input vectors (x1(2), x2(2), ..., xd(2)) at a time step 2 to determine vectors (z1(2), z2(2), ..., zH(2)) of a hidden layer through a weighted sum and an activation function. This process is repeatedly performed at time steps 2, 3, ..., T.

When a plurality of hidden layers are disposed in the recurrent neural network, this is referred to as a deep recurrent neural network (DRNN). The recurrent neural network is designed to be usefully applied to sequence data (e.g., natural language processing).

A neural network core used as a learning method includes various deep learning methods such as a restricted Boltzmann machine (RBM), a deep belief network (DBN), and a deep Q-network, in addition to the DNN, the CNN, and the RNN, and may be applied to fields such as computer vision, speech recognition, natural language processing, and voice/signal processing.

Recently, attempts to integrate AI with a wireless communication system have appeared, but this has been concentrated in the field of wireless resource management and allocation in the application layer, network layer, in particular, deep learning. However, such research is gradually developing into the MAC layer and the physical layer, and in particular, attempts to combine deep learning with wireless transmission in the physical layer have appeared. The AI-based physical layer transmission refers to applying a signal processing and communication mechanism based on an AI driver, rather than a traditional communication framework in the fundamental signal processing and communication mechanism. For example, deep learning-based channel coding and decoding, deep learning-based signal estimation and detection, deep learning-based MIMO mechanism, AI-based resource scheduling and allocation, and the like, nay be included.

### Terahertz (THz) communication

THz communication is applicable to the 6G system. For example, a data rate may increase by increasing bandwidth. This may be performed by using sub-TH communication with wide bandwidth and applying advanced massive MIMO technology.

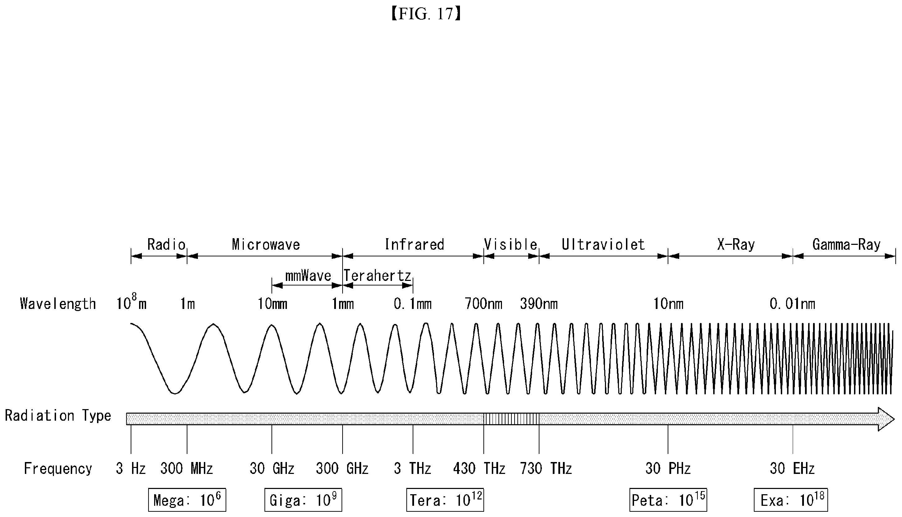

FIG. 17 illustrates an electromagnetic spectrum applicable to the present disclosure. For example, referring to FIG. 17, THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

### Optical wireless technology

Optical wireless communication (OWC) technology is planned for 6G communication in addition to RF based communication for all possible device-to-access networks. This network is connected to a network-to-backhaul/fronthaul network connection. OWC technology has already been used since 4G communication systems but will be more widely used to satisfy the requirements of the 6G communication system. OWC technologies such as light fidelity/visible light communication, optical camera communication and free space optical (FSO) communication based on wide band are well-known technologies. Communication based on optical wireless technology may provide a very high data rate, low latency and safe communication. Light detection and ranging (LiDAR) may also be used for ultra-high resolution 3D mapping in 6G communication based on wide band.

### FSO backhaul network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

### Massive MIMO technology

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

### Blockchain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

### 3D networking

The 6G system integrates terrestrial and public networks to support vertical expansion of user communication. A 3D BS will be provided through low-orbit satellites and UAVs. Adding new dimensions in terms of altitude and related degrees of freedom makes 3D connections significantly different from existing 2D networks.

### Quantum communication

In the context of the 6G network, unsupervised reinforcement learning of the network is promising. The supervised learning method cannot label the vast amount of data generated in 6G. Labeling is not required for unsupervised learning. Thus, this technique can be used to autonomously build a representation of a complex network. Combining reinforcement learning with unsupervised learning may enable the network to operate in a truly autonomous way.

### Unmanned aerial vehicle

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

### Cell-free Communication

The tight integration of multiple frequencies and heterogeneous communication technologies is very important in the 6G system. As a result, a user can seamlessly move from network to network without having to make any manual configuration in the device. The best network is automatically selected from the available communication technologies. This will break the limitations of the cell concept in wireless communication. Currently, user movement from one cell to another cell causes too many handovers in a high-density network, and causes handover failure, handover delay, data loss and ping-pong effects. 6G cell-free communication will overcome all of them and provide better QoS. Cell-free communication will be achieved through multi-connectivity and multi-tier hybrid technologies and different heterogeneous radios in the device.

### Wireless information and energy transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

### Integration of sensing and communication

An autonomous wireless network is a function for continuously detecting a dynamically changing environment state and exchanging information between different nodes. In 6G, sensing will be tightly integrated with communication to support autonomous systems.

### Integration of access backhaul network

In 6G, the density of access networks will be enormous. Each access network is connected by optical fiber and backhaul connection such as FSO network. To cope with a very large number of access networks, there will be a tight integration between the access and backhaul networks.

### Hologram beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram beamforming (HBF) is a new beamforming method that differs significantly from MIMO systems because this uses a software-defined antenna. HBF will be a very effective approach for efficient and flexible transmission and reception of signals in multi-antenna communication devices in 6G.

### Big data analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

### Large intelligent surface (LIS)

In the case of the THz band signal, since the straightness is strong, there may be many shaded areas due to obstacles. By installing the LIS near these shaded areas, LIS technology that expands a communication area, enhances communication stability, and enables additional optional services becomes important. The LIS is an artificial surface made of electromagnetic materials, and can change propagation of incoming and outgoing radio waves. The LIS can be viewed as an extension of massive MIMO, but differs from the massive MIMO in array structures and operating mechanisms. In addition, the LIS has an advantage such as low power consumption, because this operates as a reconfigurable reflector with passive elements, that is, signals are only passively reflected without using active RF chains. In addition, since each of the passive reflectors of the LIS must independently adjust the phase shift of an incident signal, this may be advantageous for wireless communication channels. By properly adjusting the phase shift through an LIS controller, the reflected signal can be collected at a target receiver to boost the received signal power.

### THz wireless communication

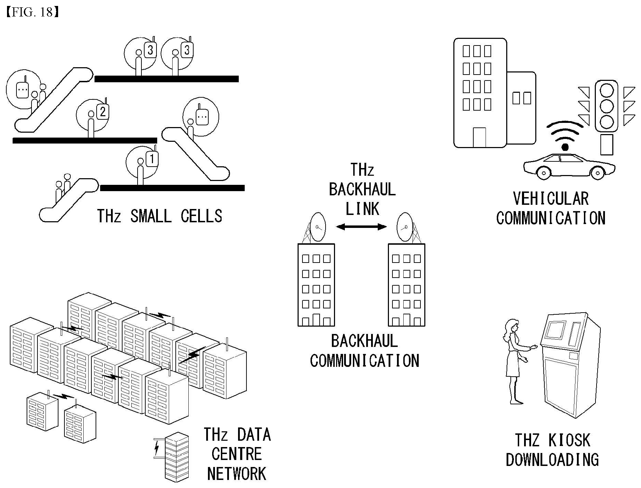

FIG. 18 illustrates a THz communication method applicable to the present disclosure.

Referring to FIG. 18, THz wireless communication uses a THz wave having a frequency of approximately 0.1 to 10 THz (1 THz = 1012 Hz), and may mean terahertz (THz) band wireless communication using a very high carrier frequency of 100 GHz or more. The THz wave is located between radio frequency (RF)/millimeter (mm) and infrared bands, and (i) transmits non-metallic/non-polarizable materials better than visible/infrared rays and has a shorter wavelength than the RF/millimeter wave and thus high straightness and is capable of beam convergence.

In addition, the photon energy of the THz wave is only a few meV and thus is harmless to the human body. A frequency band which will be used for THz wireless communication may be a D-band (110 GHz to 170 GHz) or a H-band (220 GHz to 325 GHz) band with low propagation loss due to molecular absorption in air. Standardization discussion on THz wireless communication is being discussed mainly in IEEE 802.15 THz working group (WG), in addition to 3GPP, and standard documents issued by a task group (TG) of IEEE 802.15 (e.g., TG3d, TG3e) specify and supplement the description of this disclosure. The THz wireless communication may be applied to wireless cognition, sensing, imaging, wireless communication, and THz navigation.

Specifically, referring to FIG. 18, a THz wireless communication scenario may be classified into a macro network, a micro network, and a nanoscale network. In the macro network, THz wireless communication may be applied to vehicle-to-vehicle (V2V) connection and backhaul/fronthaul connection. In the micro network, THz wireless communication may be applied to near-field communication such as indoor small cells, fixed point-to-point or multi-point connection such as wireless connection in a data center or kiosk downloading. Table 5 below shows an example of technology which may be used in the THz wave.

**[Table 5]**

| **Transceivers Device** | Available immature: UTC-PD, RTD and SBD |
|---|---|
| **Modulation and coding** | Low order modulation techniques (OOK, QPSK), LDPC, Reed Soloman, Hamming, Polar, Turbo |
| **Antenna** | Omni and Directional, phased array with low number of antenna elements |
| **Bandwidth** | 69GHz (or 23 GHz) at 300GHz |
| **Channel models** | Partially |
| **Data rate** | 100Gbps |
| **Outdoor deployment** | No |
| **Free space loss** | High |
| **Coverage** | Low |
| **Radio Measurements** | 300GHz indoor |
| **Device size** | Few micrometers |

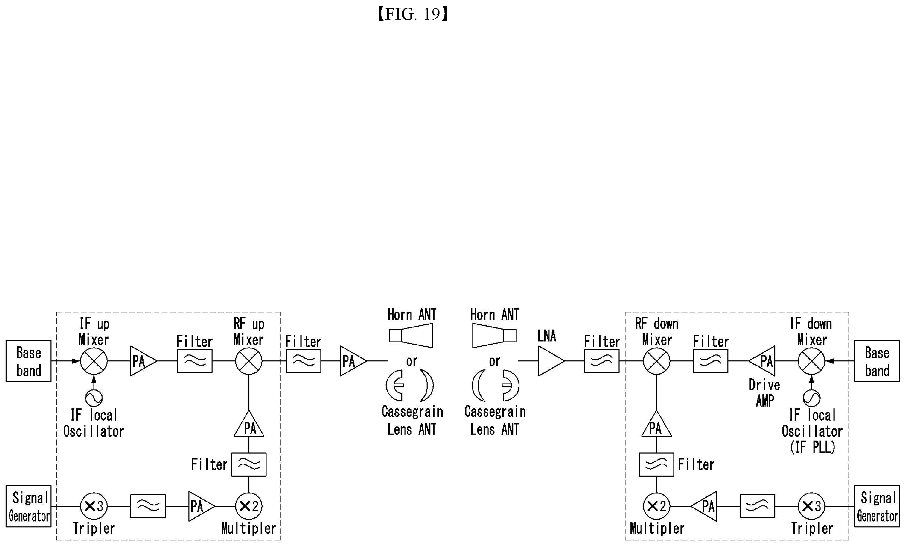

FIG. 19 illustrates a THz wireless communication transceiver applicable to the present disclosure.

Referring to FIG. 19, THz wireless communication may be classified based on the method of generating and receiving THz. The THz generation method may be classified as an optical device or electronic device based technology.

At this time, the method of generating THz using an electronic device includes a method using a semiconductor device such as a resonance tunneling diode (RTD), a method using a local oscillator and a multiplier, a monolithic microwave integrated circuit (MMIC) method using a compound semiconductor high electron mobility transistor (HEMT) based integrated circuit, and a method using a Si-CMOS-based integrated circuit. In the case of FIG. 19, a multiplier (doubler, tripler, multiplier) is applied to increase the frequency, and radiation is performed by an antenna through a subharmonic mixer. Since the THz band forms a high frequency, a multiplier is essential. Here, the multiplier is a circuit having an output frequency which is N times an input frequency, and matches a desired harmonic frequency, and filters out all other frequencies. In addition, beamforming may be implemented by applying an array antenna or the like to the antenna of FIG. 19. In FIG. 19, IF represents an intermediate frequency, a tripler and a multiplier represents a multiplier, PA represents a power amplifier, and LNA represents a low noise amplifier, and PLL represents a phase-locked loop.

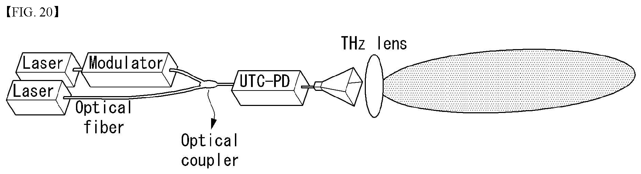

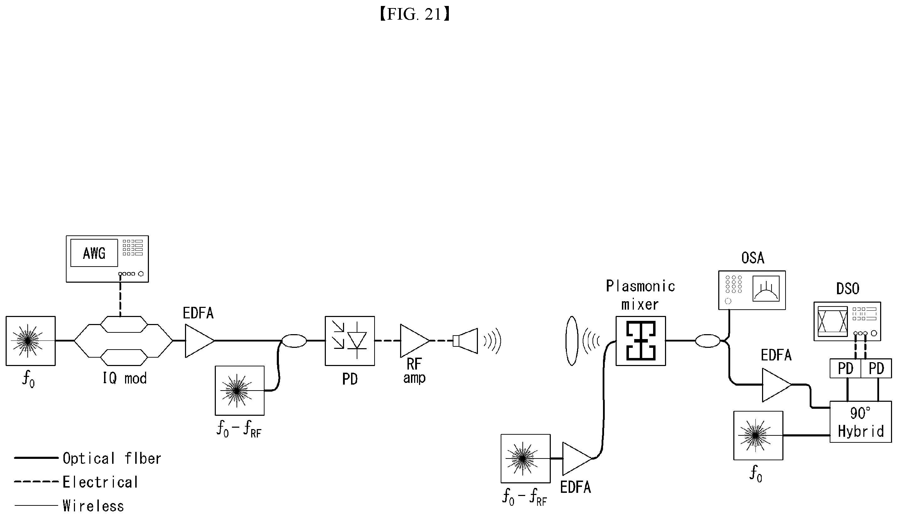

FIG. 20 illustrates a THz signal generation method applicable to the present disclosure. FIG. 21 illustrates a wireless communication transceiver applicable to the present disclosure.

Referring to FIGS. 20 and 21, the optical device-based THz wireless communication technology means a method of generating and modulating a THz signal using an optical device. The optical device-based THz signal generation technology refers to a technology that generates an ultrahigh-speed optical signal using a laser and an optical modulator, and converts it into a THz signal using an ultrahigh-speed photodetector. This technology is easy to increase the frequency compared to the technology using only the electronic device, can generate a high-power signal, and can obtain a flat response characteristic in a wide frequency band. In order to generate the THz signal based on the optical device, as shown in FIG. 20, a laser diode, a broadband optical modulator, and an ultrahigh-speed photodetector are required. In the case of FIG. 20, the light signals of two lasers having different wavelengths are combined to generate a THz signal corresponding to a wavelength difference between the lasers. In FIG. 20, an optical coupler refers to a semiconductor device that transmits an electrical signal using light waves to provide coupling with electrical isolation between circuits or systems, and a uni-travelling carrier photo-detector (UTC-PD) is one of photodetectors, which uses electrons as an active carrier and reduces the travel time of electrons by bandgap grading. The UTC-PD is capable of photodetection at 150 GHz or more. In FIG. 21, an erbium-doped fiber amplifier (EDFA) represents an optical fiber amplifier to which erbium is added, a photo detector (PD) represents a semiconductor device capable of converting an optical signal into an electrical signal, and OSA represents an optical sub assembly in which various optical communication functions (e.g., photoelectric conversion, electrophonic conversion, etc.) are modularized as one component, and DSO represents a digital storage oscilloscope.

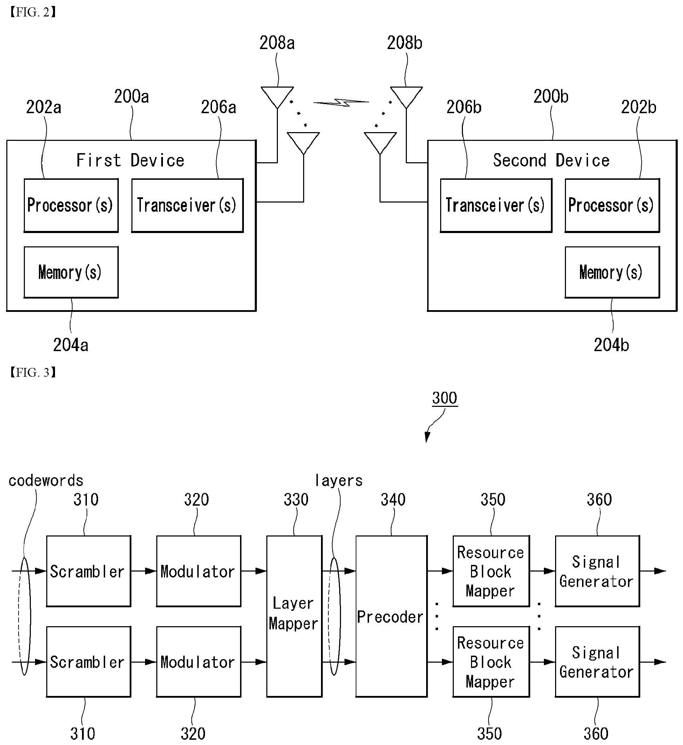

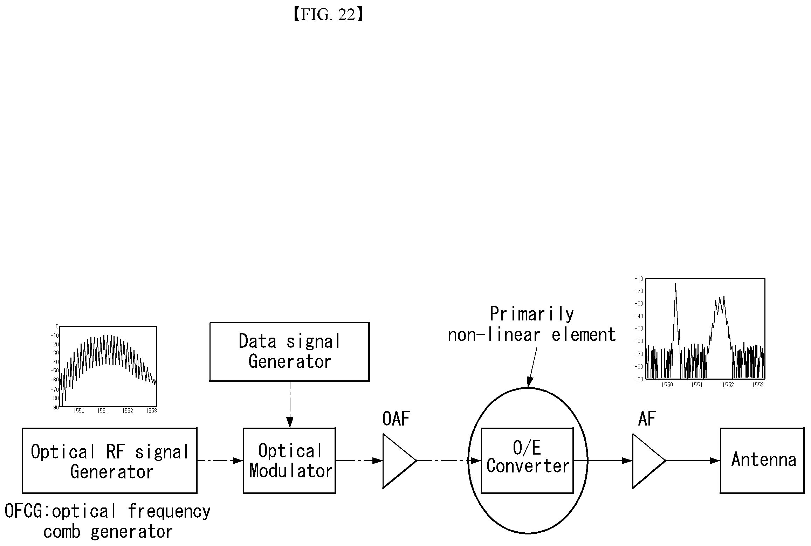

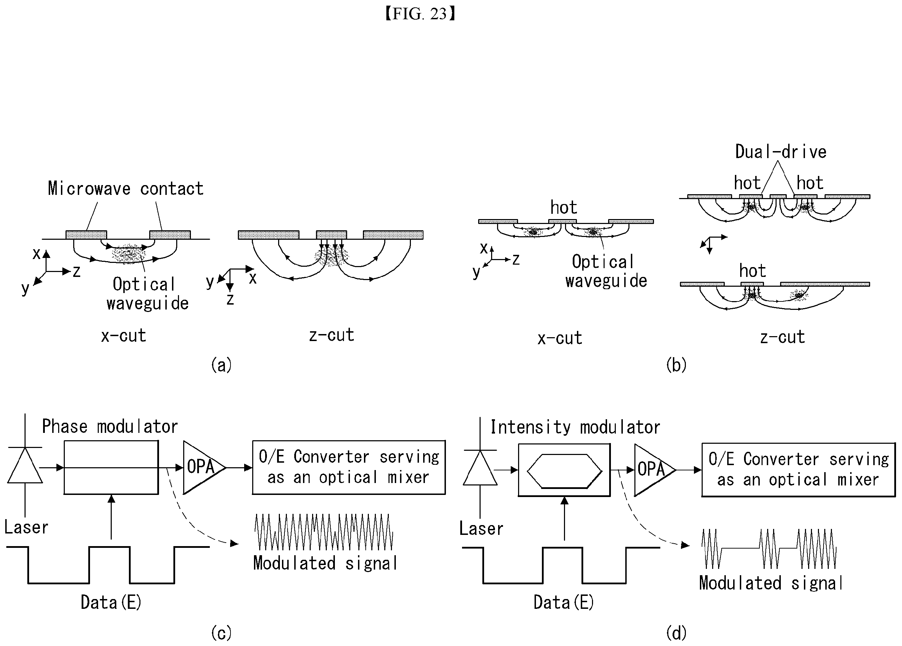

FIG. 22 illustrates a transmitter structure applicable to the present disclosure. FIG. 23 illustrates a modulator structure applicable to the present disclosure.

Referring to FIGS. 22 and 23, generally, the optical source of the laser may change the phase of a signal by passing through the optical wave guide. At this time, data is carried by changing electrical characteristics through microwave contact or the like. Thus, the optical modulator output is formed in the form of a modulated waveform. A photoelectric modulator (O/E converter) may generate THz pulses according to optical rectification operation by a nonlinear crystal, photoelectric conversion (O/E conversion) by a photoconductive antenna, and emission from a bunch of relativistic electrons. The terahertz pulse (THz pulse) generated in the above manner may have a length of a unit from femto second to pico second. The photoelectric converter (O/E converter) performs down conversion using non-linearity of the device.

Given THz spectrum usage, multiple contiguous GHz bands are likely to be used as fixed or mobile service usage for the terahertz system. According to the outdoor scenario criteria, available bandwidth may be classified based on oxygen attenuation 10^2 dB/km in the spectrum of up to 1 THz. Accordingly, a framework in which the available bandwidth is composed of several band chunks may be considered. As an example of the framework, if the length of the terahertz pulse (THz pulse) for one carrier (carrier) is set to 50 ps, the bandwidth (BW) is about 20 GHz.

Effective down conversion from the infrared band to the terahertz band depends on how to utilize the nonlinearity of the O/E converter. That is, for down-conversion into a desired terahertz band (THz band), design of the photoelectric converter (O/E converter) having the most ideal non-linearity to move to the corresponding terahertz band (THz band) is required. If a photoelectric converter (O/E converter) which is not suitable for a target frequency band is used, there is a high possibility that an error occurs with respect to the amplitude and phase of the corresponding pulse.

In a single carrier system, a terahertz transmission/reception system may be implemented using one photoelectric converter. In a multi-carrier system, as many photoelectric converters as the number of carriers may be required, which may vary depending on the channel environment. Particularly, in the case of a multi-carrier system using multiple broadbands according to the plan related to the above-described spectrum usage, the phenomenon will be prominent. In this regard, a frame structure for the multi-carrier system can be considered. The down-frequency-converted signal based on the photoelectric converter may be transmitted in a specific resource region (e.g., a specific frame). The frequency domain of the specific resource region may include a plurality of chunks. Each chunk may be composed of at least one component carrier (CC).

Here, wireless communication technology implemented in the wireless devices 200a and 200b of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices of the present disclosure may perform communication based on LTE-M technology. In this case, as an example, the LTE-M technology may be an example of the LPWAN and may be called various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M. Additionally or alternatively, the wireless communication technology implemented in the wireless devices 200a and 200b of the present disclosure may include at least one of ZigBee, Bluetooth, and Low Power Wide Area Network (LPWAN) considering the low-power communication, and is not limited to the name described above. As an example, the ZigBee technology may generate personal area networks (PAN) associated with small/low-power digital communication based on various standards including IEEE 802.15.4, and the like, and may be called various names.

### Background Technology

Representative factors that degrade the performance of communication systems in the THz band include the generation of carrier frequency offset (CFO) and phase noise (PN). The CFO may be generally generated by RF impairment and the Doppler effect, and the PN may be generated by the RF impairment. The CFO normalized by OFDM SCS may be represented as shown in Equation 1 below.$ϵ = \frac{Δ {f}_{c} + \frac{v}{c} {f}_{c}}{Δ f}$

In Equation 1, *ε* may be the CFO normalized by OFDM SCS, Δ*f_{c}* may be a deviation between a carrier of the transmitter and a carrier of the receiver, *v* may be a moving speed of the receiver, *c* may be the speed of light, and *f_{c}* may be an OFDM subcarrier frequency.

Referring to Equation 1, the CFO may increase as the deviation between the carrier of the transmitter and the carrier of the receiver increases, the moving speed of the receiver increases, and the OFDM subcarrier frequency increases. The CFO may cause performance degradation during a signal acquisition stage required to perform synchronization between the transmitter and the receiver. In particular, in THz-band communication systems that utilize high carrier frequencies, the performance during the signal acquisition stage due to the CFO may be further degraded. In the existing CFO estimation method, the CFO may be estimated using a cyclic prefix (CP), which is a repeated signal in OFDM, when the CFO is less than a subcarrier spacing (SCS), and may be estimated using a sweeping method when the CFO is greater than the SCS. In the sweeping method, the system overhead may significantly increase.

### Embodiments of the present disclosure

### Symbols/Abbreviations/Terms

The symbols/abbreviations/terms used in the present disclosure are as follows.
- AWGN: Additive White Gaussian Noise
- CP: Cyclic Prefix
- CFO: Channel Frequency Offset
- DFnT: Discrete Fresnel Transform
- ICI: Inter Carrier Interference
- OCDM: Orthogonal Chirp Division Multiplexing
- OFDM: Orthogonal Frequency Division Multiplexing
- PN: Phase Noise
- PSS: Primary Synchronization Signal
- SCS: Sub Carrier Spacing
- THz: Tera-Hertz

### Problem to be solved

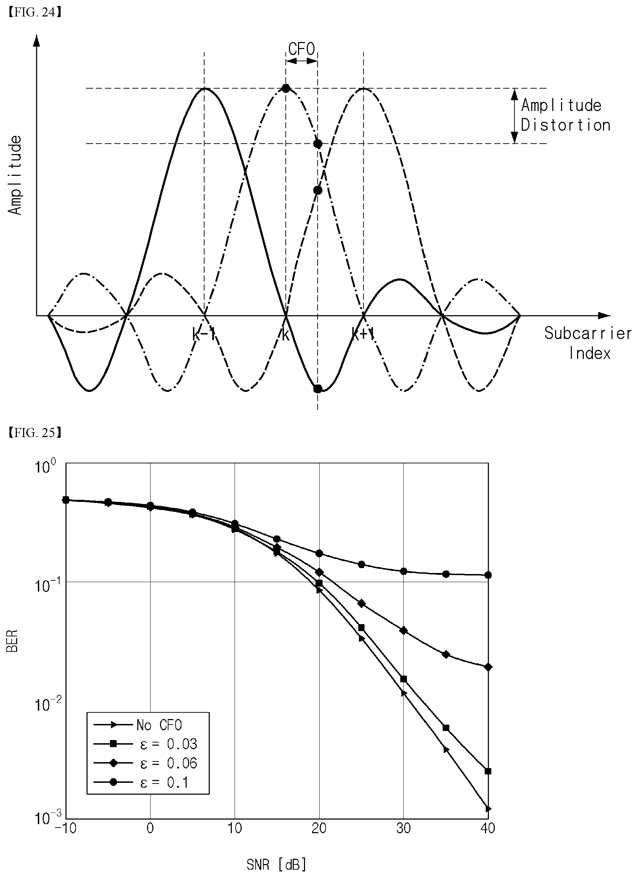

FIG. 24 illustrates an example of ICI generation according to CFO in a wireless communication system. FIG. 25 illustrates an example of ICI impact according to CFO in a wireless communication system.

More specifically, FIG. 24 illustrates an example of ICI generation as the orthogonality between orthogonal frequencies is broken when CFO occurs in an OFDM system. FIG. 25 illustrates a graph comparing an impact of ICI according to a normalized CFO of an OFDM system on BER vs. SNR performance.

Referring to FIG. 24, if orthogonality between frequencies is maintained, the signal of contiguous frequencies becomes zero. However, if orthogonality is broken by the CFO, components of contiguous frequencies are received and may act as interference. Referring to the above-described Equation 1, the CFO may generally increase as the speed of a mobile object increases, a carrier frequency of a base station increases, and the deviation between carriers of the base station and a UE increases. Depending on the application, the probability of the CFO increasing increases in satellite communication or future sub-THz or THz communication systems, as they involve ultra-high-speed movement and high carrier frequencies. In existing LTE or 5G NR, residual CFO components with CFO value less than 1 may be estimated using cyclic prefix (CP) of the OFDM system. However, for CFO components with CFO value exceeding 1, the only method available is to manually search for them by sweeping nearby frequencies, which has the disadvantage of significantly high complexity.

When ICI due to the CFO exists, the received symbols and the ICI due to the CFO can be expressed as shown in the following Equations 2 and 3, respectively.$r \left[k\right] = x \left[k\right] I \left[0\right] + {\sum }_{m = 0 , m \neq k}^{N - 1} x \left[m\right] I \left[m-k\right] + w \left[k\right]$$I \left[n\right] = \frac{sin \left(π\left(n+ϵ\right)\right)}{N sin \left(π\left(n+ϵ\right)/N\right)} {e}^{\frac{jπ \left(n+ϵ\right) \left(N-1\right)}{N}}$

In Equations 2 and 3, r may be the received symbol, x may be the transmitted symbol, w may be AWGN, I may be ICI, N may be the number of subcarriers, *ε* may be CFO.

Referring to FIG. 25, as the CFO increases, the ICI may increase, causing an increase in the term (i.e., interference) within the summation notation of Equation 2. Consequently, it can be observed that BER performance further deteriorates at the same SNR. To recover the deterioration, the introduction of an additional algorithm is required, and the occurrence of overhead due to the algorithm may be unavoidable.

### Detailed description of the present disclosure

### Orthogonal Chirp Signal

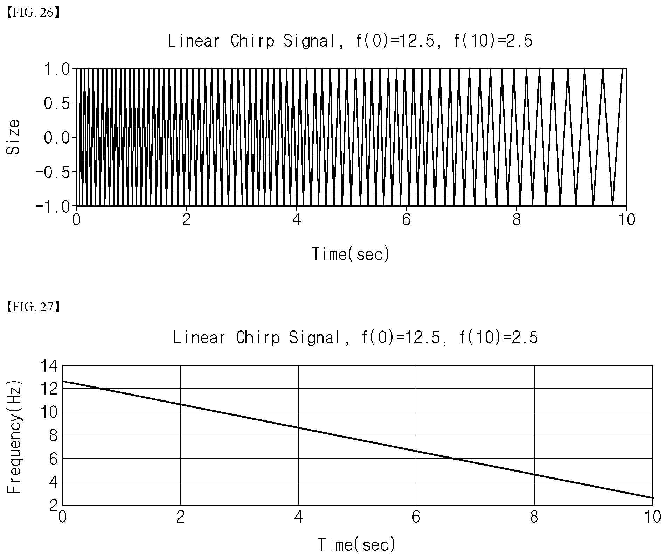

FIG. 26 illustrates a linear chirp signal on a time/size axis in a wireless communication system. FIG. 27 illustrates a linear chirp signal on a time/frequency axis in a wireless communication system.

Referring to FIGS. 26 and 27, the chirp signal may be a signal used in the LoRA (long range) standard for long-range transmission of frequency modulation continuous wave (FMCW) radar or Internet of Things (IoT) devices. The chirp signal may be robust to the CFO and the PN due to characteristics of a chirp spreading spectrum. The chirp signal may include a linear chirp signal and a nonlinear chirp signal. The linear chirp signal may be expressed as in Equation 4 below.$ψ \left(t\right) = {e}^{j \left({παt}^{2}+{φ}_{0}\right)}$

In Equation 4, *ψ*(*t*) may be a linear chirp signal, α may be a chirp rate, and *φ*₀ may be an initial phase value. The chirp rate may be a variable that determine a slope of the chirp signal. In general, the higher the chirp rate, the more abrupt a slope (e.g., a slope of a straight line in FIG. 27) may be on the time/frequency axis.

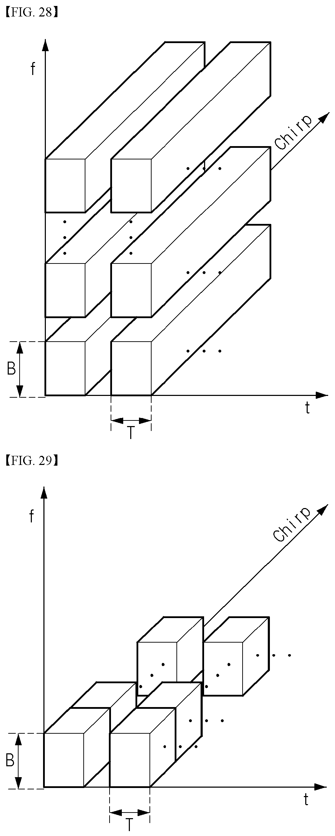

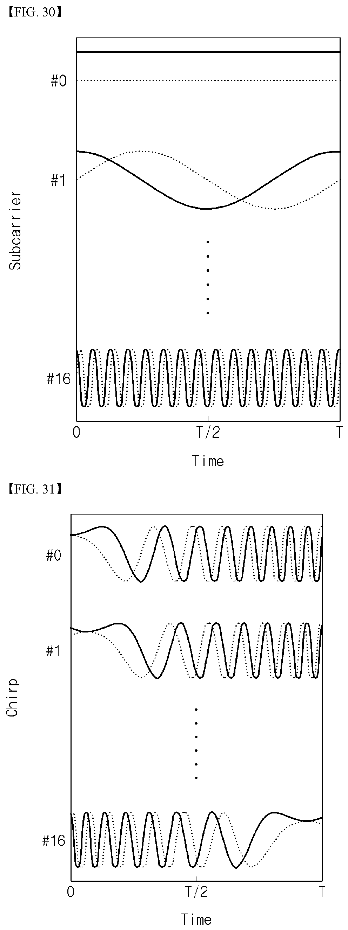

FIG. 28 illustrates an example of a general chirp signal in a wireless communication system. FIG. 29 illustrates an example of an orthogonal chirp signal in a wireless communication system. FIG. 30 illustrates an example of an OFDM signal in a wireless communication system. FIG. 31 illustrates an example of an OCDM signal in a wireless communication system.

Referring to FIGS. 28 and 29, a general chirp signal shall use different frequency bands at the same time, but an orthogonal chirp signal may use multiple chirp signals by overlapping the chirp signals at the same time and in the same frequency band. The characteristics of the orthogonal chirp signal may be considered in the same way as a method of utilizing the orthogonality of frequencies in an OFDM system. The orthogonal chirp signal used in the OCDM system may be expressed as in Equation 5 below.${ψ}_{k} \left(t\right) = {e}^{j \frac{π}{4}} {e}^{- jπ \frac{N}{{T}^{2}} {\left(t-k\frac{T}{N}\right)}^{2}} , 0 \leq t < T$

In Equation 5, *ψₖ*(*t*) may be a kth orthogonal chirp signal, N may be the number of orthogonal chirps included in the orthogonal chirp signal, and T may be a transmission period. Referring to Equation 5, the chirp rates of all the orthogonal chirp signals may be the same as $\frac{N}{{T}^{2}}$.

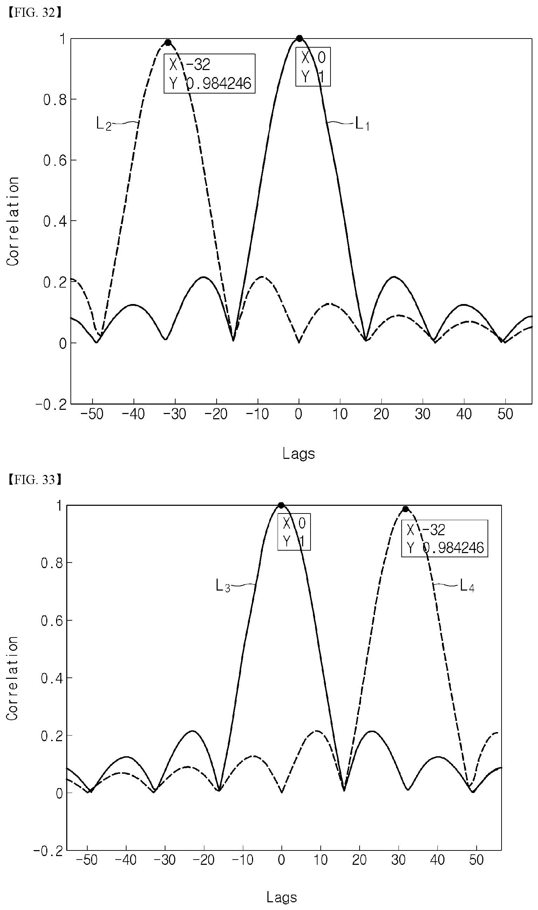

Referring to FIGS. 30 and 31, for example, when there are 17 subcarriers, an OFDM signal may be represented as in FIG. 31, and when N is 17 in Equation 5, the OCDM signal may be represented as in FIG. 32.

### CFO estimation method using orthogonal chirp signal

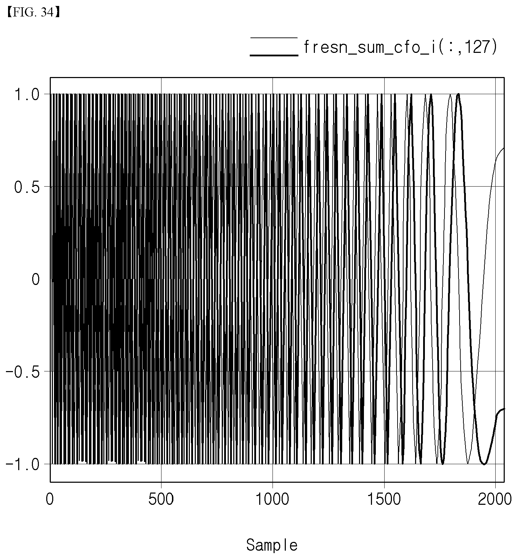

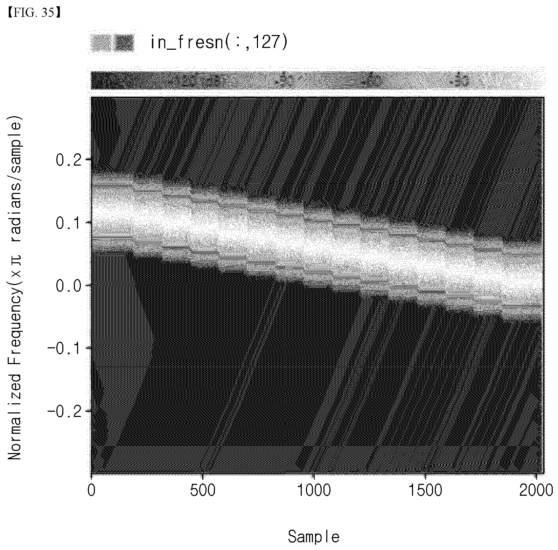

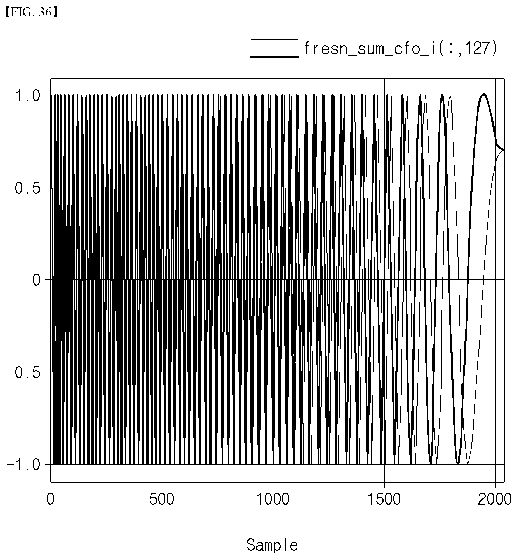

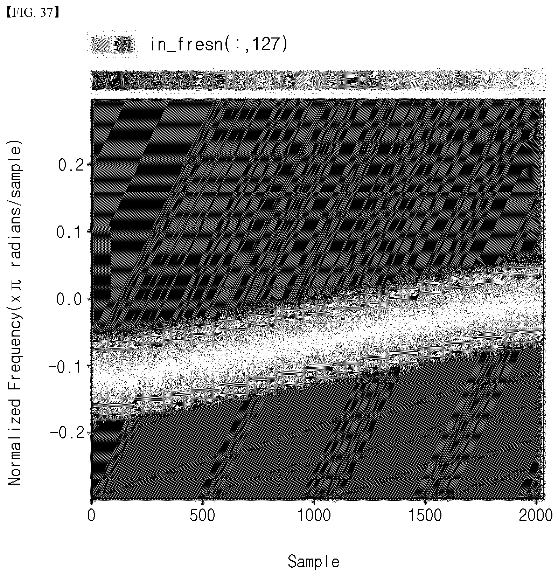

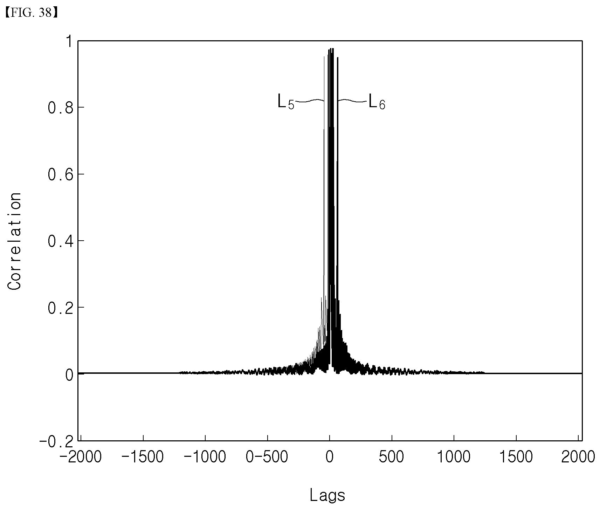

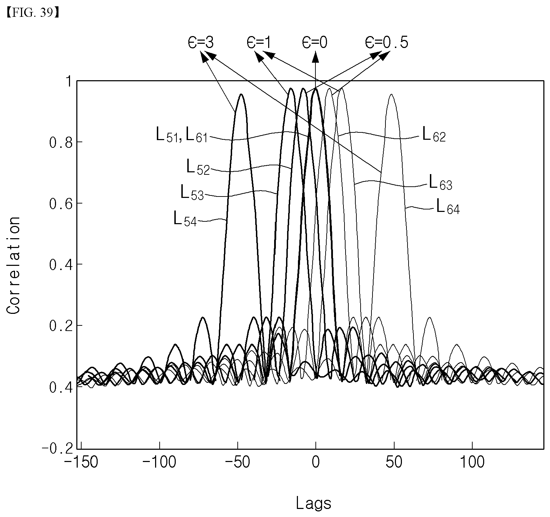

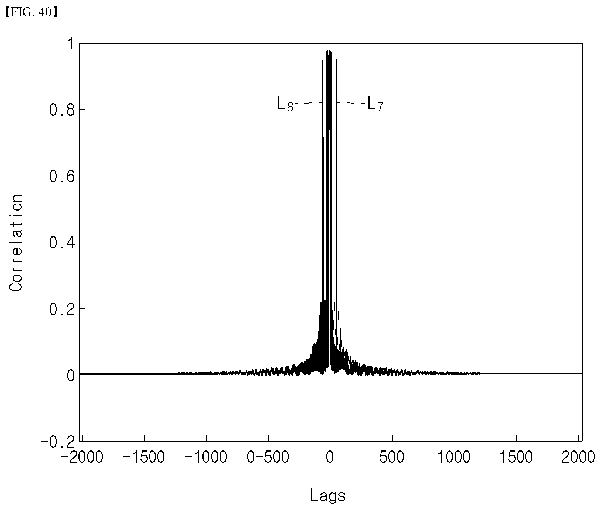

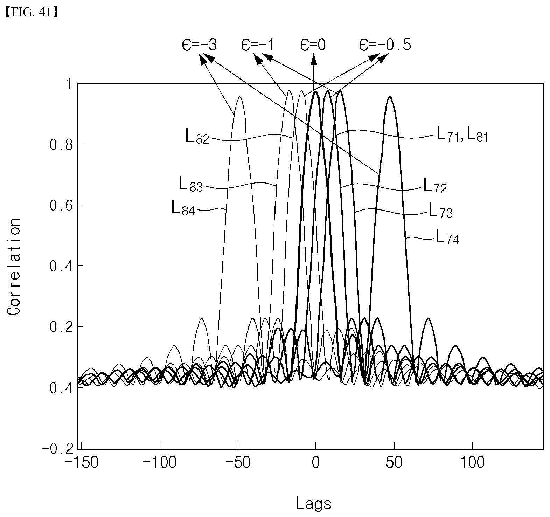

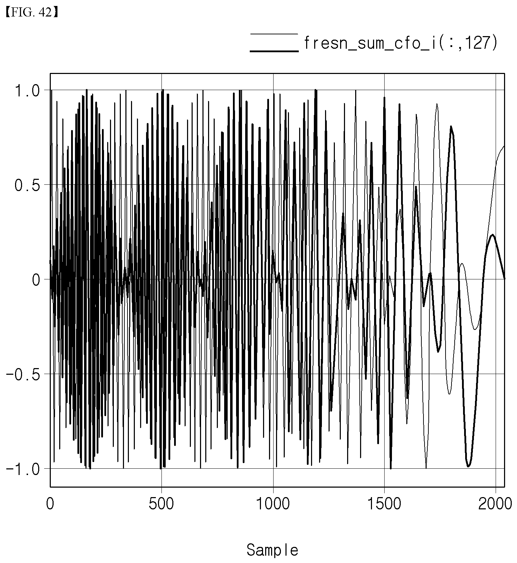

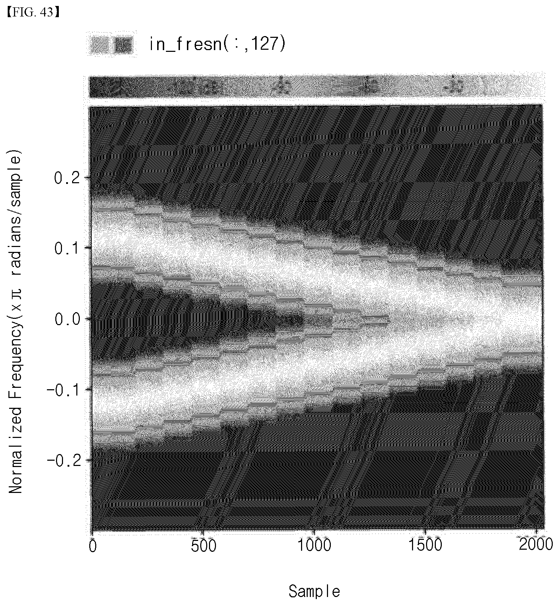

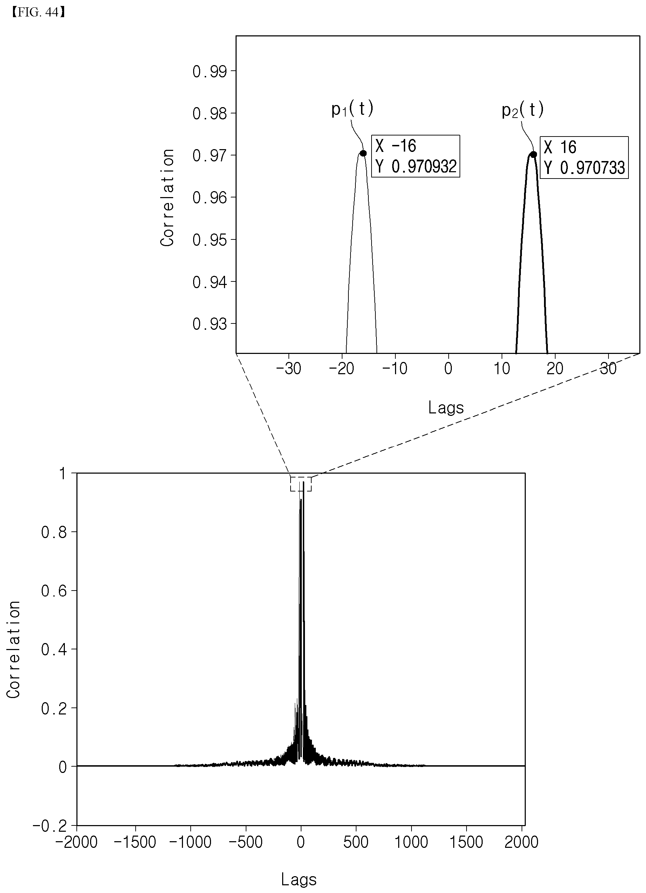

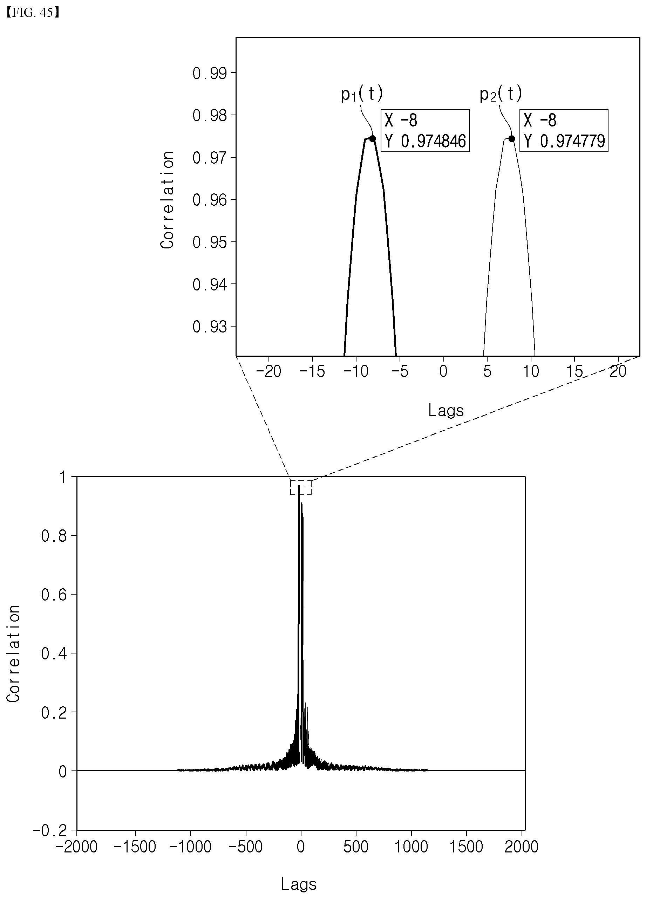

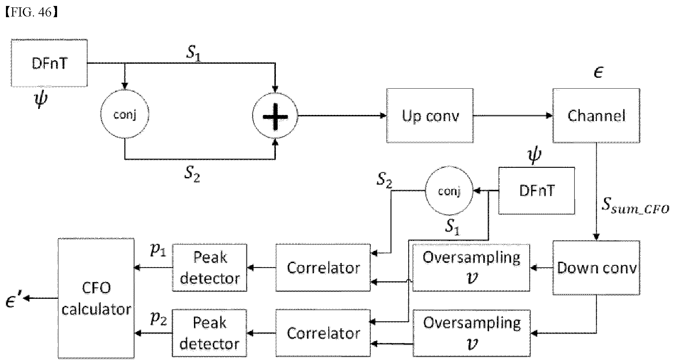

FIGS. 32 and 33 illustrate an example of autocorrelation in a wireless communication system. FIGS. 34 and 35 illustrate an example of a first signal in a wireless communication system. FIGS. 36 and 37 illustrate an example of a third signal in a wireless communication system. FIGS. 38 and 39 illustrate an example of a correlation when a positive CFO is inserted in a wireless communication system. FIGS. 40 and 41 illustrate an example of a correlation when a negative CFO is inserted in a wireless communication system. FIGS. 42 and 43 illustrate an example of a fifth signal in a wireless communication system. FIGS. 44 and 45 illustrate an example of a CFO estimation method according to an embodiment of the present disclosure. FIG. 46 illustrates an example of a diagram of a CFO estimation method according to an embodiment of the present disclosure.

More specifically, FIGS. 32 and 33 illustrate a result of autocorrelation characteristics based on presence or absence of CFO of any chirp signal. FIG. 32 illustrates autocorrelation of a first signal of any chirp signal, and FIG. 33 illustrates autocorrelation of a third signal of any chirp signal. In FIG. 32, L₁ is the result of autocorrelation characteristics when the CFO is absent (ε = 0), and L₂ is the result of autocorrelation characteristics when the CFO is present (ε = 2). In FIG. 33, L₃ is the result of autocorrelation characteristics when the CFO is absent (ε = 0), and L₄ is the result of autocorrelation characteristics when the CFO is present (ε = 2).

FIG. 34 illustrates the first signal in the time domain, and FIG. 35 illustrates the first signal in the time-frequency domain. FIG. 36 illustrates the third signal in the time domain, and FIG. 37 illustrates the third signal in the time-frequency domain.

FIGS. 38 and 39 illustrate a correlation between a first signal and a third signal and a correlation between a second signal and a fourth signal when a positive CFO is inserted.

In FIGS. 38 and 39, L₅(L₅₁ to L₅₄) may represent a correlation between the first signal and the third signal. L₅₁ to L₅₄ may represent a correlation when the CFO is 0, 0.5, 1, and 3, respectively. L₆(L₆₁ to L₆₄) may represent a correlation between the second signal and the fourth signal. L₆₁ to L₆₄ may represent a correlation when the CFO is 0, 0.5, 1, and 3, respectively.

FIGS. 40 and 41 illustrate a correlation between a first signal and a third signal and a correlation between a second signal and a fourth signal when a negative CFO is inserted.

In FIGS. 40 and 41, L₇(L₇₁ to L₇₄) may represent a correlation between the first signal and the third signal. L₇₁ to L₇₄ may represent a correlation when the CFO is 0, 0.5, 1, and 3, respectively. L₈(L₈₁ to L₈₄) may represent a correlation between the second signal and the fourth signal. L₈₁ to L₈₄ may represent a correlation when the CFO is 0, 0.5, 1, and 3, respectively.

Referring to FIGS. 32 to 41, when the CFO is added to the orthogonal chirp signal of Equation 5, the orthogonal chirp signal may be represented as shown in Equation 6 below.${ψ}_{k _ CFO} \left(t\right) = {ψ}_{k} \left(t\right) ⋅ {e}^{j 2 π ϵ \frac{t}{N}} , 0 \leq t < T$

In Equation 6, *ψ_{k_CFO}*(*t*) may be a kth orthogonal chirp signal in which the CFO is considered.

The first to fourth signals may be represented as shown in Equations 7 to 10 below.${S}_{1}^{k} \left(t\right) = {ψ}_{k} \left(t\right) , 0 \leq t < T$${S}_{2}^{k} \left(t\right) = {ψ}_{k}^{∗} \left(t\right) , 0 \leq t < T$${S}_{1 _ CFO}^{k} \left(t\right) = {ψ}_{k} \left(t\right) ⋅ {e}^{j 2 π ϵ \frac{t}{N}} , 0 \leq t < T$${S}_{2 _ CFO}^{k} \left(t\right) = {ψ}_{k}^{∗} \left(t\right) ⋅ {e}^{j 2 π ϵ \frac{t}{N}} , 0 \leq t < T$

In Equations 7 to 10, ${S}_{1}^{k} \left(t\right) , {S}_{2}^{k} \left(t\right) , {S}_{1 _ CFO}^{k} \left(t\right)$ and ${S}_{2 _ CFO}^{k} \left(t\right)$ are may be the first to fourth signals, respectively.

Referring to FIGS. 38 and 39, it can be seen that L₅ and L₆ have peaks at left and right symmetrical points based on lags=0. Based on this, the receiver may detect not only residual CFO but also common CFO.

Referring to FIGS. 40 and 41, it can be seen that L₇ and L₈ have peaks at left and right symmetrical points based on lags=0. Based on this, the receiver may detect not only residual CFO but also common CFO.

The fifth signal may be a signal generated by combining the first signal and the second signal, and the sixth signal may be a signal generated by combining the third signal and the fourth signal. The fifth signal and the sixth signal may be represented as shown in Equations 11 and 12 below, respectively.${S}_{sum} \left(t\right) = {S}_{1}^{k} \left(t\right) + {S}_{{}^{2}}^{k} \left(t\right) = re \left({S}_{1}^{k}\left(t\right)\right) + im \left({S}_{1}^{k}\left(t\right)\right) + re \left({S}_{1}^{k}\left(t\right)\right) - im \left({S}_{1}^{k}\left(t\right)\right) = 2 ⋅ re \left({S}_{1}^{k}\left(t\right)\right)$${S}_{sum _ CFO} \left(t\right) = 2 ⋅ re \left({S}_{1}^{k}\left(t\right)\right) ⋅ {e}^{j 2 π ϵ \frac{t}{N}}$

In Equations 11 and 12, *Sₛᵤₘ*(*t*) may be the fifth signal, and *S_{sum_CFO}*(*t*) may be the sixth signal. The value of k in the fifth signal may be 1, but this is an example and is not limited thereto.

A method of estimating the CFO based on the correlation results illustrated in FIGS. 38 to 41 may be represented as in Equation 13 below.$ϵ ′ = \left({p}_{1}\left(t\right)-{p}_{2}\left(t\right)\right) / \left(v⋅2\right)$

In Equation 13, *ε'* may be the CFO, v may be an oversampling factor, and *p*₁(*t*) and *p*₂(*t*) may be peak positions (i.e., lag point) of the correlation values of Equations 7 and 11 and Equations 8 and 11. In this case, *p*₁(*t*) and *p*₂(*t*) may be symmetric with respect to 0.

Referring to FIG. 44, for example, when v is 16 and *p*₁(*t*) and *p*₂(*t*) are 16 and -16, respectively, the CFO may be 1, and this value may mean the CFO equal to 1 times a sub-carrier spacing (SCS).

Referring to FIG. 45, for example, when v is 16 and *p*₁(*t*) and *p*₂(*t*) are 8 and -8, respectively, the CFO may be -0.5.

The larger the value of v, the more accurate the CFO value the receiver can estimate, but the system complexity increases accordingly. Therefore, it is necessary to set it to an appropriate value. Since the receiver can estimate the time synchronization using midpoint information between the two peak positions, the receiver can simultaneously estimate the time synchronization and the CFO.

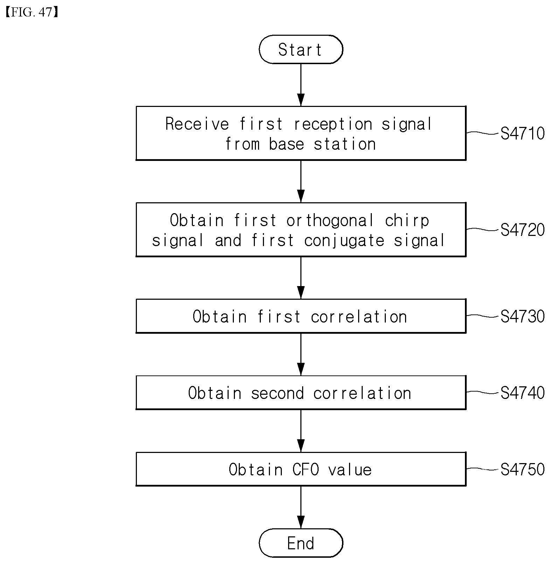

FIG. 47 is a flowchart illustrating a method of transmitting and receiving a signal according to an embodiment of the present disclosure.

Referring to FIG. 47, a user equipment (UE) may receive a first reception signal from a base station, in S4710. The UE may receive, from the base station, the first reception signal that is based on a first orthogonal chirp signal and a first conjugate signal which is a conjugate signal of the first orthogonal chirp signal.

The UE may obtain the first orthogonal chirp signal and the first conjugate signal based on the first reception signal, in S4720. The UE may perform oversampling on the first orthogonal chirp signal with respect to a sampling factor and perform oversampling on the first conjugate signal with respect to the sampling factor to obtain the first orthogonal chirp signal and the first conjugate signal.

The UE may obtain a first correlation based on the first orthogonal chirp signal and a second orthogonal chirp signal related to the first orthogonal chirp signal, in S4730.

The UE may obtain a second correlation based on the first conjugate signal and a second conjugate signal which is a conjugate signal of the second orthogonal chirp signal, in S4740.

The UE may obtain a carrier frequency offset (CFO) value for the first reception signal, in S4750. The UE may obtain a peak value of the first correlation and a peak value of the second correlation, and obtain the CFO value based on the peak value of the first correlation and the peak value of the second correlation.

According to an embodiment, the UE may obtain the CFO value for the first reception signal based on the peak value of the first correlation, the peak value of the second correlation, and the sampling factor.

The UE may perform synchronization with the bae station based on the peak value of the first correlation and the peak value of the second correlation.

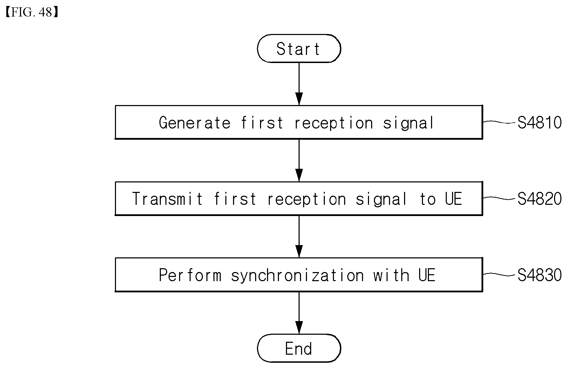

FIG. 48 is a flowchart illustrating a method of transmitting and receiving a signal according to another embodiment of the present disclosure.

A base station may generate a first reception signal, in S4810. The base station may generate the first reception signal that is based on a first orthogonal chirp signal and a first conjugate signal which is a conjugate signal of the first orthogonal chirp signal.

According to an embodiment, the base station may perform an up-conversion on the first orthogonal chirp signal, perform an up-conversion on the first conjugate signal, and generate the first reception signal by performing summation on the up-converted first orthogonal chirp signal and the up-converted first conjugate signal.

The base station may transmit the first reception signal to a user equipment (UE), in S4820.

The base station may perform synchronization with the UE based on the first reception signal, in S4830. The synchronization may be performed based on a peak value of a first correlation obtained based on the first orthogonal chirp signal and a second orthogonal chirp signal related to the first orthogonal chirp signal, and a peak value of a second correlation obtained based on the first orthogonal chirp signal, the first conjugate signal, and a second conjugate signal related to the first conjugate signal.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## Claims

1. A method performed by a user equipment (UE) in a wireless communication system, the method comprising:
receiving, from a base station (BS), a first reception signal that is based on a first orthogonal chirp signal and a first conjugate signal which is a conjugate signal of the first orthogonal chirp signal;
obtaining the first orthogonal chirp signal and the first conjugate signal based on the first reception signal;
obtaining a first correlation based on the first orthogonal chirp signal and a second orthogonal chirp signal related to the first orthogonal chirp signal;
obtaining a second correlation based on the first conjugate signal and a second conjugate signal which is a conjugate signal of the second orthogonal chirp signal;
obtaining a peak value of the first correlation;
obtaining a peak value of the second correlation; and
obtaining a carrier frequency offset (CFO) value for the first reception signal based on the peak value of the first correlation and the peak value of the second correlation.

2. The method of claim 1, wherein the obtaining of the first orthogonal chirp signal and the first conjugate signal based on the first reception signal comprises:
performing oversampling on the first orthogonal chirp signal with respect to a sampling factor; and
performing oversampling on the first conjugate signal with respect to the sampling factor.

3. The method of claim 2, wherein the obtaining of the CFO value for the first reception signal based on the peak value of the first correlation and the peak value of the second correlation comprises:
obtaining the CFO value for the first reception signal based on the peak value of the first correlation, the peak value of the second correlation, and the sampling factor.

4. The method of claim 1, further comprising:
performing synchronization with the base station based on the peak value of the first correlation and the peak value of the second correlation.

5. A user equipment (UE) operating in a communication system comprising:
one or more transceivers;
one or more processors controlling the one or more transceivers; and
a memory comprising one or more instructions executed by the one or more processors,
wherein the one or more instructions comprise:
receiving, from a base station (BS), a first reception signal that is based on a first orthogonal chirp signal and a first conjugate signal which is a conjugate signal of the first orthogonal chirp signal;
obtaining the first orthogonal chirp signal and the first conjugate signal based on the first reception signal;
obtaining a first correlation based on the first orthogonal chirp signal and a second orthogonal chirp signal related to the first orthogonal chirp signal;
obtaining a second correlation based on the first conjugate signal and a second conjugate signal which is a conjugate signal of the second orthogonal chirp signal;
obtaining a peak value of the first correlation;
obtaining a peak value of the second correlation; and
obtaining a carrier frequency offset (CFO) value for the first reception signal based on the peak value of the first correlation and the peak value of the second correlation.

6. The UE of claim 5, wherein the obtaining of the first orthogonal chirp signal and the first conjugate signal based on the first reception signal comprises:
performing oversampling on the first orthogonal chirp signal with respect to a sampling factor; and
performing oversampling on the first conjugate signal with respect to the sampling factor.

7. The UE of claim 6, wherein the obtaining of the CFO value for the first reception signal based on the peak value of the first correlation and the peak value of the second correlation comprises:
obtaining the CFO value for the first reception signal based on the peak value of the first correlation, the peak value of the second correlation, and the sampling factor.

8. The UE of claim 5, wherein the one or more instructions further comprise performing synchronization with the base station based on the peak value of the first correlation and the peak value of the second correlation.

9. A method performed by a base station (BS) in a wireless communication system, the method comprising:
generating a first reception signal that is based on a first orthogonal chirp signal and a first conjugate signal which is a conjugate signal of the first orthogonal chirp signal;
transmitting the first reception signal to a user equipment (UE); and
performing synchronization with the UE based on the first reception signal,
wherein the synchronization is performed based on a peak value of a first correlation obtained based on the first orthogonal chirp signal and a second orthogonal chirp signal related to the first orthogonal chirp signal, and a peak value of a second correlation obtained based on the first orthogonal chirp signal, the first conjugate signal, and a second conjugate signal related to the first conjugate signal.

10. The method of claim 9,
wherein the generating of the first reception signal based on the first orthogonal chirp signal and the first conjugate signal which is the conjugate signal of the first orthogonal chirp signal comprises:
performing an up-conversion on the first orthogonal chirp signal;
performing an up-conversion on the first conjugate signal; and
generating the first reception signal by performing summation on the up-converted first orthogonal chirp signal and the up-converted first conjugate signal.

11. A base station (BS) operating in a communication system comprising:
one or more transceivers;
one or more processors controlling the one or more transceivers; and
a memory comprising one or more instructions executed by the one or more processors,
wherein the one or more instructions comprise:
generating a first reception signal that is based on a first orthogonal chirp signal and a first conjugate signal which is a conjugate signal of the first orthogonal chirp signal;
transmitting the first reception signal to a user equipment (UE); and
performing synchronization with the user equipment based on the first reception signal,
wherein the synchronization is performed based on a peak value of a first correlation obtained based on the first orthogonal chirp signal and a second orthogonal chirp signal related to the first orthogonal chirp signal, and a peak value of a second correlation obtained based on the first orthogonal chirp signal, the first conjugate signal, and a second conjugate signal related to the first conjugate signal.

12. The base station of claim 11, wherein the generating of the first reception signal based on the first orthogonal chirp signal and the first conjugate signal which is the conjugate signal of the first orthogonal chirp signal comprises:
performing an up-conversion on the first orthogonal chirp signal;
performing an up-conversion on the first conjugate signal; and
generating the first reception signal by performing summation on the up-converted first orthogonal chirp signal and the up-converted first conjugate signal.

13. An apparatus comprising:
one or more memories; and
one or more processors functionally coupled to the one or more memories,
wherein the one or more processors are configured to cause the apparatus to:
receive, from a base station (BS), a first reception signal that is based on a first orthogonal chirp signal and a first conjugate signal which is a conjugate signal of the first orthogonal chirp signal;
obtain the first orthogonal chirp signal and the first conjugate signal based on the first reception signal;
obtain a first correlation based on the first orthogonal chirp signal and a second orthogonal chirp signal related to the first orthogonal chirp signal;
obtain a second correlation based on the first conjugate signal and a second conjugate signal which is a conjugate signal of the second orthogonal chirp signal;
obtain a peak value of the first correlation;
obtain a peak value of the second correlation; and
obtain a carrier frequency offset (CFO) value for the first reception signal based on the peak value of the first correlation and the peak value of the second correlation.

14. A non-transitory computer-readable medium storing one or more instructions and being configured to:
receive, from a base station (BS), a first reception signal that is based on a first orthogonal chirp signal and a first conjugate signal which is a conjugate signal of the first orthogonal chirp signal;
obtain the first orthogonal chirp signal and the first conjugate signal based on the first reception signal;
obtain a first correlation based on the first orthogonal chirp signal and a second orthogonal chirp signal related to the first orthogonal chirp signal;
obtain a second correlation based on the first conjugate signal and a second conjugate signal which is a conjugate signal of the second orthogonal chirp signal;
obtain a peak value of the first correlation;
obtain a peak value of the second correlation; and
obtain a carrier frequency offset (CFO) value for the first reception signal based on the peak value of the first correlation and the peak value of the second correlation.

15. An apparatus comprising:
one or more memories; and
one or more processors functionally coupled to the one or more memories,
wherein the one or more processors are configured to cause the apparatus to:
generate a first reception signal that is based on a first orthogonal chirp signal and a first conjugate signal which is a conjugate signal of the first orthogonal chirp signal;
transmit the first reception signal to a user equipment (UE);
perform synchronization with the UE based on the first reception signal,
wherein the synchronization is performed based on a peak value of a first correlation obtained based on the first orthogonal chirp signal and a second orthogonal chirp signal related to the first orthogonal chirp signal, and a peak value of a second correlation obtained based on the first orthogonal chirp signal, the first conjugate signal, and a second conjugate signal related to the first conjugate signal.

16. A non-transitory computer-readable medium storing one or more instructions and being configured to:
generate a first reception signal that is based on a first orthogonal chirp signal and a first conjugate signal which is a conjugate signal of the first orthogonal chirp signal;
transmit the first reception signal to a user equipment (UE); and
perform synchronization with the UE based on the first reception signal,
wherein the synchronization is performed based on a peak value of a first correlation obtained based on the first orthogonal chirp signal and a second orthogonal chirp signal related to the first orthogonal chirp signal, and a peak value of a second correlation obtained based on the first orthogonal chirp signal, the first conjugate signal, and a second conjugate signal related to the first conjugate signal.
